# EUROPÄISCHE PATENTSCHRIFT

(11) **EP 3 400 272 B1**
(45) Veröffentlichungstag und Bekanntmachung des Hinweises auf die Patenterteilung: **15.07.2020**
(21) Anmeldenummer: 17701797.7
(22) Anmeldetag: 09.01.2017
(51) Int. Cl.: C09K 21/02, C09K 21/10, D21H 21/34, E04B 1/94, H01B 7/295

(54) **FLAMM- ODER BRANDSCHUTZMITTEL UND DESSEN HERSTELLUNG UND VERWENDUNG INSBESONDERE FÜR HOLZ-, CELLULOSE- UND POLYOLEFIN-BASIERTE PRODUKTE**
FLAME OR FIRE PROTECTION AGENT AND PRODUCTION AND USE THEREOF IN PARTICULAR FOR WOOD-, CELLULOSE-, AND POLYOLEFIN-BASED PRODUCTS
AGENT RETARDATEUR DE FLAMME OU IGNIFUGE ET FABRICATION ET UTILISATION DE CELUI-CI NOTAMMENT POUR PRODUITS À BASE DE BOIS, DE CELLULOSE ET DE POLYOLÉFINE

(30) Priorität: 09.01.2016 DE 102016100271
(43) Veröffentlichungstag der Anmeldung: 14.11.2018
(73) Patentinhaber: Tahmouresinia, Fernando, 31141 Hildesheim (DE)
(72) Erfinder: Tahmouresinia, Fernando, 31141 Hildesheim (DE)
(74) Vertreter: Gosmann, Martin
(86) Internationale Anmeldenummer: PCT/EP2017/050361
(87) Internationale Veröffentlichungsnummer: WO 2017/118765

(56) Entgegenhaltungen:
- EP-A1- 2 208 594
- WO-A1-2014/026741
- WO-A2-00/34342
- AT-A1- 507 049
- DE-A1- 4 007 060
- US-A- 5 443 894

## Beschreibung

Die Erfindung betrifft die Verwendung eines Mittels und Materialien dieses enthaltend, insbesondere ein Flammschutzmittel und/oder Brandschutzmittel, zur Reduktion der Entflammbarkeit und/oder Brennbarkeit von diversen Materialien oder Stoffen, wie z.B. Holz und Holzprodukte, Textilen und Textilprodukte, Papier und Papierprodukte, Karton, Fasern und Geweben, Farben usw., oder basierend auf oder in Kombination mit Polyolefin-basierten Materialien und/oder Produkten und/oder Vorprodukten, einschließlich von Verbundmaterialien und/oder Verbundwerkstoffen damit, die Herstellung des Mittels und Methoden bzw. Vorgänge unter Verwendung des Mittels und/oder der entsprechenden Kombination seiner Einzelbestandteile zur Reduktion der Entflammbarkeit und/oder Brennbarkeit.

Feuer und seine Entdeckung ist eine der wichtigsten Ereignisse in der Geschichte der Menschheit, mit enormem Einfluss auf die menschliche Entwicklung. Neben seiner für den Menschen lebensnotwendige Funktion, hat das Feuer aber auch einen Nachteil, nämlich seine Eigenschaft zum Verbrennen von Gegenständen, die jährlich zu zahlreichen materiellen und finanziellen Schäden in unserer Gesellschaft führt.

Leicht entflammbare Materialen und Stoffe sind gefährlich, da sie anfällig sind, Feuer zu fangen und Brände zu entfachen. Deshalb ist es wichtig einen effektiven Weg zu finden solche entflammbare Stoffe mit einem Flamm- und/oder Brandschutz zu versehen, der solche Materialien und Stoffe weniger gefährlich macht.

Die Erfindung bezieht sich auf die Verwendung eines Mittels und Materialien dieses enthaltend zur Verminderung der Entflammbarkeit und/oder Brennbarkeit von Materialien, insbesondere Flammschutzmittel und/oder Brandschutzmittel.

Als Flammschutzmittel bekannt sind Mischungen organischer und/oder anorganischer Stoffe, die dazu bestimmt sind, eine Entflammung oder auch lediglich eine Entzündung von Holz- bzw. holzartigen Werkstoffen, Kunststoffen, Textilien, Papier, Pappe, Karton, Kunst- und Naturfasern sowie Geweben, Farben, oder Erzeugnissen daraus, Baustoffe, Isoliermaterialien, Elektro- und/oder Kabelisolierungen usw. zu verhindern oder zumindest zu hemmen. Sie sollen darüber hinaus insbesondere eine Verbrennung dieser Stoffe erschweren.

Im Stand der Technik sind zwar zahlreiche Substanzen oder auch Substanzgruppen als solche bekannt, denen eine entflammungshemmende Wirkung zukommt. Der Umstand, dass man im Regelfall jedoch bemüht war, für diese Zwecke stoffliche Mischungen und nicht einzelne Stoffe bzw. Substanzen einzusetzen, lässt bereits erkennen, dass die Eigenschaften und Wirkungen dieser Stoffe bzw. Substanzen als solche genommen für den gewählten Zweck noch nicht als optimal angesehen worden sind. Die konkrete Konfektion unter Anpassung an alle Randbedingungen des Einzelfalls, insbesondere unter Beachtung von ggf. unerwünschten Nebenwirkungen, erfolgt auch unter dem Gesichtspunkt einer Umweltverträglichkeit. Ein weiteres Kriterium ist die Komplexität des jeweiligen Herstellungsprozesses.

So beschreibt die EP 2208594 A1 ein Verfahren, welches das Bereitstellen von Lignocellulosen und eines kleinen Stückmaterials und das Mischen der Lignocellulosen und des kleinen Stückmaterials mit einem expandierbaren Graphit zu einer Mischung beinhaltet. Die Mischung wird mit einer Bindeeinheit aufgeklebt und die aufgeklebte Mischung auf eine bestimmte Einzelmatte verteilt. Die Matte wird bei erhöhtem Druck und erhöhter Temperatur zu einer Holzplatte gepresst. Die Matte ist einschichtig ausgebildet und der expandierbare Graphit verteilt sich über einen gesamten Querschnitt der Matte. Die Holzplatte ist mit einer Beschichtung versehen.

Die US 5443894 A beschreibt ein feuerhemmendes Holzbauelement, wie beispielsweise die Bahn eines Holzbalkens, eine Wandplatte, eine Außen- oder Innenverkleidung oder dergleichen, die aus OSB-Platten (OSB = Oriented Strang Board) mit Außenschichten gebildet ist, die Partikel enthalten expandierbarer Graphit und eine Kernschicht, die frei von expandierbarem Graphit ist.

Die WO2014026741 A1 beschreibt einen flammwidrig ausgebildeten Schmelzklebstoff, dadurch gekennzeichnet, dass dieser die folgenden Komponenten enthält: a) 20 bis 70 Gewichtsprozent eines oder mehrerer Polyolefinwachse eines oder mehrerer C3-C18 α-Olefin(e) und gegebenenfalls Ethylen; b) 9 bis 30 Gewichtsprozent expandierten Graphits; c) 5 bis 30 Gewichtsprozent eines weiteren Flammschutzmittels; d) 0 bis 15 Gewichtsprozent eines Antistatikums; e) 0 bis 12 Gewichtsprozent eines oder mehrerer Harze; f) 0 bis 40 Gewichtsprozent eines oder mehrerer amorpher, ataktischer Poly-α-Olefine (APAO).

Die DE4007060 A1 beschreibt eine Intumeszenzfolie, hergestellt durch ein Papier- und Kartonierverfahren, bestehend aus einer Mischung aus Fasern und expandierbarem Graphit. Insbesondere werden expandierbare Flächengebilde hergestellt, indem man bei einem Papierherstellungsprozess Fasern und Blähgraphite einsetzt.

Die WO0034342 A2 beschreibt ein Verfahren zur Herstellung von expandierbaren Polystyrolpolymerisaten in Form von Partikeln, enthaltend 5 bis 50 Gew.-% abgeblätterten Graphit und gegebenenfalls 2 bis 20 Gew.-% Phosphorverbindung als Flammenbildner. Erfindungsgemäß werden diese Polystyrolverbindungen durch Suspensionspolymerisation von Styrol in Gegenwart von Flammenbildnern hergestellt.

Der Flammschutz und/oder Brandschutz ist im Bereich von Holz- und/oder Cellulose- und/oder Polyolefin-basierten Materialien und/oder Produkten und/oder Vorprodukten trotz vielfältiger Vorschläge im Stand der Technik in der Praxis immer noch nicht zufriedenstellend gelöst. Insbesondere bei Produkten, die aus faserigen Holz- und/oder Cellulose-Materialien, z.B. durch Verschäumen, Verfilzen, Verdichten und/oder Verpressen/Pressen, oder basierend auf oder in Kombination mit Polyolefin-basierten Materialien und/oder Produkten und/oder Vorprodukten gefertigt werden, ist der Flammschutz und/oder Brandschutz weiterhin unbefriedigend, da leider auch Holz- und/oder CelluloseMaterialien, die nach Behandlung mit anorganischen Flammschutz und/oder Brandschutz im Flammschutz- und/oder Brandschutz-Test als solche an sich nicht brennbar sind und auch kein Nachglimmen zeigen, nach Weiterverarbeitung mit weiteren Stoffen wie z.B. Leime oder Klebstoffe zu verschäumten, vefilzten, verdichteten oder ver-/gepressten Produkten trotz verbessertem Flammschutz- bzw. Brandschutz-Verhaltens unerwartet nachglimmen, schlimmstenfalls sogar bis hin zur Zersetzung der genannten Holz- und/oder Cellulose-Produkte. Dieses unerwartete Nachglimmen wurde selbst bei Anwendung neuartiger optimierter anorganischer Flammschutz und/oder Brandschutz-Mittel beobachtet, wie diese in der deutschen Patentanmeldung DE 10 2015 119 558.5 vom 12.11.2015 beschrieben sind. Zudem ist der Brandschutz und/oder Flammschutz von Bindemittel und/oder Leime enthaltenden sowie von Polyolefin-basierten Materialien und/oder Produkten und/oder Vorprodukten einerseits für die Dämmung und andererseits für Bodenbeläge und Wandbeläge, sowohl im Innen- als auch in Außenbereich, trotz vielfältiger Vorschläge im Stand der Technik in der Praxis immer noch nicht zufriedenstellend gelöst.

Es ist vor diesem Hintergrund die Aufgabe der Erfindung, ein Mittel der vorstehend beschriebenen Art zur Verfügung zu stellen, welches das zu schützende Material, Produkt und/oder Vorprodukt nicht schädigt und insbesondere keine giftigen Gase freisetzt. Zudem sollen die Herstellung der Mittel und deren Verwendung, insbesondere für die Dämmung und andererseits für Bodenbeläge und Wandbeläge, sowohl im Innen- als auch in Außenbereich, einfach und wirtschaftlich sehr günstig sein. Gelöst wird diese Aufgabe mit einer solchen Verwendung und einem solchen Mittel mit den Merkmalen, wie in den Ansprüchen angegeben.

Demgemäß betrifft die Erfindung im weitesten Sinne die Verwendung von Blähgraphit nach Anspruch 1 zur Verminderung der Entflammbarkeit und/oder Brennbarkeit, insbesondere die Verwendung als Flammschutzmittel und/oder Brandschutzmittel, für Materialien und/oder Produkte und/oder Vorprodukte, die aus Holzfasern und/oder Cellulosefasern und/oder aus Holzpulvern und/oder Cellulosepulvern und/oder Holzgranulaten und/oder Cellulosegranulaten und/oder Polyolefin-basierten Materialien bestehen oder diese umfassen, insbesondere für Bindemittel und/oder Leime und/oder Polyolefin-basierte Stoffe enthaltende Materialien und/oder Produkte und/oder Vorprodukte, vorzugsweise für die Dämmung (Wand, Boden, Decke) und/oder für Bodenbeläge und Wandbeläge. Solche Materialien und/oder Produkte und/oder Vorprodukte für die Dämmung können erfindungsgemäß gleichermaßen für den Innen- und Außenbereich vorgesehen werden. Solche Materialien und/oder Produkte und/oder Vorprodukte Bodenbeläge und Wandbeläge können erfindungsgemäß ebenfalls für den Innen- und Außenbereich vorgesehen werden, wobei der Innenbereich im Rahme der vorliegenden Erfindung jedoch bevorzugt ist.

Polyolefin-basierte Stoffe enthaltende Materialien und/oder Produkte und/oder Vorprodukte sind definitionsgemäß solche, die (Heteroatom-freie) aliphatische und/oder (Heteroatom-freie) aromatische Polyolefine umfassen oder daraus bestehen. Die genannten Polyolefine können hierbei als Pulver, Granulat und/oder Polymer-Lösung eingesetzt werden, bzw. es kann verarbeitungstechnisch bzw. anwendungstechnisch das Aufschmelzen, Aufschäumen und/oder Pressen vorgesehen sein. Bevorzugte aliphatische Polyolefine sind hierbei insbesondere Polyethylen und/oder Polypropylen. Bevorzugtes aromatisches Polyolefin ist hierbei insbesondere Polystyrol. Polystryol kann ein thermoplastischer Schaumstoff auf Basis von Polystyrol, vorzugsweise von expandiertem oder extrudiertem thermoplastischen Schaumstoff auf Basis von Polystyrol sein. Wahlweise zeichnet sich die Erfindung dadurch aus, dass das geschäumte Polystyrol ein thermoplastischer Schaum auf Basis von Polystyrol als expandiertes (EPS) und/oder extrudiertes Polystyrol (XPS) ist.

Sofern die Erfindung nachfolgend am Beispiel von Holzfasern und/oder Cellulosefasern und daraus hergestellten oder diese umfassende Materialien und/oder (Vor-)Produkte beschrieben wird, wird der Fachmann erkennen, dass diese Offenbarung gleichermaßen auch für Holzpulver und/oder Cellulosepulver und/oder Holzgranulate und/oder Cellulosegranulate und daraus hergestellte oder diese umfassende Materialien und/oder (Vor-)Produkte gilt.

Bindemittel und Leime sind die in der Holzverarbeitung üblicherweise eingesetzten, dem Fachmann auf dem Gebiet bekannten Stoffe. Auf Bindemittel und Leime wird weiter unten noch näher eingegangen.

Unter dem Begriff "Faser" wird hierbei erfindungsgemäß verstanden: Eine Faser ist ein im Verhältnis zu seiner Länge dünnes und flexibles Gebilde, das aus einem Faserstoff besteht. Um im technischen Bereich von einer Faser zu sprechen, sollte das Verhältnis von Länge zu Durchmesser mindestens zwischen 3:1 und 10:1 liegen; für viele, z.B. textile, Anwendungen liegt es bei über 1000:1. Fasern können in Längsrichtung keine Druck-, sondern nur Zugkräfte aufnehmen, da sie bei Druckbelastung knicken.

Unter dem Begriff "Pulver" werden erfindungsgemäß lufttrockene Haufwerke aus festen Teilchen verstanden. Die einzelnen Teilchen unterscheiden sich durch Größe, Form, Masse und Oberfläche. Der Zusammenhalt wird durch Kohäsionskräfte gewährleistet. Der Begriff "Puder" wird synonym oder allgemeiner als "Pulver" bezeichnet, was ein sehr feines Schüttgut ist, und bezeichnet einen sehr fein gemahlenen, trockenen Feststoff.

Unter dem Begriff "Granulat" wird hierbei erfindungsgemäß verstanden: Granulate sind zusammen gelagerte Aggregate aus Pulverpartikeln, die ungleichmäßige Oberflächen und innere Strukturen aufweisen. Durch die Zusammenlagerung verkleinert sich die spezifische Oberfläche. Dies führt zu einer Verminderung der Adhäsionskräfte, was durch gegenseitiges Verschränken und Verhaken der Granulatbestandteil beim Verpressen mehr als ausgeglichen wird. Granulare Materie, auch ein Granulares Medium oder Granulat genannt, besteht aus vielen kleinen, festen Partikeln wie Körnern oder Kugeln. Beispiele für diesen Zustand sind körnige Materialien. Man verwendet auch die Begriffe Haufwerk für mechanische und Schüttgut für logistische Aspekte.

Die Erfindung bezieht sich auch auf ein Blähgraphit enthaltendes Mittel zur Verminderung der Entflammbarkeit und/oder Brennbarkeit von Materialien und/oder Produkten und/oder Vorprodukten, insbesondere Flammschutzmittel und/oder Brandschutzmittel, die für Holz- und/oder Cellulose-(Vor-)Produkte und/oder Polyolefin-basierte (Vor-)Produkte besonders geeignet sind, wie vorzugsweise für Materialien und/oder Produkte und/oder Vorprodukte, die aus Holzfasern und/oder Cellulosefasern und/oder aus Holzpulvern und/oder Cellulosepulvern und/oder Holzgranulaten und/oder Cellulosegranulaten und/oder Polyolefin-basierten Materialien bestehen oder diese umfassen, insbesondere für Bindemittel und/oder Leime und/oder Polyolefin-basierte Stoffe enthaltende Materialien und/oder Produkte und/oder Vorprodukte für die Dämmung (Wand, Boden, Decke) und/oder für Bodenbeläge und Wandbeläge.

Bevorzugt sind Produkte und/oder Vorprodukte aus Holz- und/oder Cellulosefasern, die Bindemittel und/oder Leime und/oder Polyolefin-basierte Stoffe der oben beschriebenen Art enthalten. Hierbei handelt es sich insbesondere um (dämmende) Baustoff-Produkte und/oder Bodenbeläge und Wandbeläge, beispielsweise in Form von Schaum-, Press-, Filz-, Vlies- und/oder Komposit-(Vor-)Produkten, bestehend aus oder umfassend Holz- und/oder Cellulosefasern sowie Bindemittel und/oder Leime und/oder Polyolefin-basierte Stoffe der oben beschriebenen Art. Solche Produkte können Faserpressplatten oder Faserfilze oder Vliese, z.B. in Form von Matten oder Wolle, Pulver- und/oder Granulatpressplatten oder Pulver- und/oder Granulatschäume und/oder Vliese sein, und diese Produkte können vorzugsweise für (dämmende) Bauzwecke, beispielsweise für den Innen- und/oder Außenbereich, insbesondere für Dämmzwecke (Wand, Boden, Decke), sowie für Wandbekleidungen und/oder Bodenbeläge, geeignet und/oder hierfür eingerichtet sein bzw. eingesetzt werden,

Bevorzugt handelt es sich in einer Ausgestaltung der Erfindung bei den erfindungsgemäßen Materialien und/oder (Vor-)Produkten daher um Dämmungen (Wand, Boden, Decke), sowohl für den Innen- und/oder Außenbereich. Bevorzugt handelt es sich in einer weiteren Ausgestaltung der Erfindung bei den erfindungsgemäßen Materialien und/oder (Vor-)Produkten um Wandbekleidungen und/oder Bodenbeläge sowohl für den Innen- und/oder Außenbereich, besonders bevorzugt für den Innenbereich.

Die Erfindung betrifft auch Materialien und/oder (Vor-)Produkte, die aus insbesondere Bindemittel und/oder Leime enthaltenden Holzfasern und/oder Cellulosefasern und/oder aus Holzpulvern und/oder Cellulosepulvern und/oder Holzgranulaten und/oder Cellulosegranulaten bestehen oder diese umfassen, und/oder bestehend aus oder umfassend Polyolefin-basierte Stoffe der oben beschriebenen Art, wobei in diese Materialien und/oder (Vor-)Produkte zur Verminderung der Entflammbarkeit und/oder Brennbarkeit, insbesondere als Flammschutzmittel und/oder Brandschutzmittel, Blähgraphit eingearbeitet ist.

Die Erfindung betrifft auch ein Verfahren zur Herstellung von Materialien und/oder Produkten und/oder Vorprodukten der vorstehend beschriebenen Art, die aus Holzfasern und/oder Cellulosefasern und/oder aus Holzpulvern und/oder Cellulosepulvern und/oder Holzgranulaten und/oder Cellulosegranulaten und/oder Polyolefin-basierten Materialien bestehen oder diese umfassen, und/oder bestehend aus oder umfassend Polyolefin-basierte Stoffe der oben beschriebenen Art, vorzugsweise Schaum-, Press-, Filz-, Vlies und/oder Komposit-Produkte, wobei während der Herstellung dieser Materialien und/oder (Vor-)Produkte, insbesondere als Bindemittel und/oder Leime und/oder Polyolefin-basierte Stoffe enthaltende Materialien und/oder Produkte und/oder Vorprodukte, vorzugsweise für die Dämmung (Wand, Boden, Decke) und/oder für Bodenbeläge und Wandbeläge, zur Verminderung der Entflammbarkeit und/oder Brennbarkeit, insbesondere als Flammschutzmittel und/oder Brandschutzmittel, Blähgraphit in Kombination mit einem weiteren Mittel zur Verminderung der Entflammbarkeit und/oder Brennbarkeit von Materialien und/oder Produkten, wie in Anspruch 2 B) definiert, eingearbeitet wird.

In einem besonderen erfindungsgemäßen Verfahren (Anspruch 3) zur Herstellung von Materialien und/oder Produkten vorstehenden erfindungsgemäßen Art, wird diese Verfahren wie folgt ausgeführt:
a) in einem ersten Verfahrensschritt Holzfasern und/oder Cellulosefasern und/oder Holzpulver und/oder Cellulosepulver und/oder Holzgranulat und/oder Cellulosegranulat mit dem oben definierten Mittel zur Verminderung der Entflammbarkeit und/oder Brennbarkeit von Materialien, insbesondere Flammschutzmittel und/oder Brandschutzmittel, enthaltend oder bestehend aus einer Kombination und/oder einem Gemisch Bs/Bx/S (siehe das in Anspruch 2 B) definierte Mittel) behandelt und sodann ggf. getrocknet wird; und
b) in einem zweiten Verfahrensschritt die im Verfahrensschritt a) mit der Kombination und/oder dem Gemisch Bs/Bx/S behandelten Holzfasern und/oder Cellulosefasern und/oder Holzpulver und/oder Cellulosepulver und/oder Holzgranulat und/oder Cellulosegranulat mit Blähgraphit wie oben beschrieben (siehe wie in Anspruch 2 A) definiert) gemischt und/oder beaufschlagt werden; und
c1) gewünschtenfalls als Bulkware konfektioniert werden; und/oder
c2) gewünschtenfalls zu Schaum-, Press-, Filz-, Vlies- und/oder Komposit-Produkten weiterverarbeitet werden.

Das vorstehende erfindungsgemäße Verfahren kann auch abgewandelt werden, insbesondere für die Ausgestaltungen der Erfindung betreffend Materialien und/oder (Vor-)Produkte, die aus insbesondere Bindemittel und/oder Leime enthaltenden Holzfasern und/oder Cellulosefasern und/oder aus Holzpulvern und/oder Cellulosepulvern und/oder Holzgranulaten und/oder Cellulosegranulaten bestehen oder diese umfassen, und/oder bestehend aus oder umfassend Polyolefin-basierte Stoffe der oben beschriebenen Art, wobei in diese Materialien und/oder (Vor-)Produkte zur Verminderung der Entflammbarkeit und/oder Brennbarkeit, insbesondere als Flammschutzmittel und/oder Brandschutzmittel, Blähgraphit direkt eingearbeitet wird. Beispielsweise kann eine ggf. Füllstoffe sowie ggf. zusätzlich eine Kombination und/oder ein Gemisch Bs/Bx/S enthaltende, Blähgraphit enthaltende Zusammensetzung auf ein behandeltes oder unbehandeltes Schaum-, Press-, Filz-, Vlies- und/oder Komposit-(Vor-)Produkt (oder daraus gebildeten Träger) als Pulver und/oder Granulat aufgestreut und/oder, falls als Lösung bzw. Emulsion bzw. Suspension vorliegend, auch aufgesprüht werden, die derart erhaltene Beschichtung aufgeschmolzen, ggf. auch unter flächigem Andruck oder flächigem Pressen, und/oder getrocknet werden, bspw. bei Temperaturen ab etwa 200 °C. Zum Aufbringen können auch Extrusionsverfahren zum Aufbringen und oder zur Weiterverarbeitung zum Einsatz gelangen. Schmelzen und Trocknen ist mit den einem Fachmann auf dem Gebiet geläufigen Methoden (z.B. Heißluft, Ofen, Mikrowelle, IR) möglich, ebenso wie weitere übliche Maßnahmen wie z.B. Finishing und/oder Kalandrieren.

Das Aufbringen von einer oder mehreren weiteren Nutzschichten und/oder Dekorschichten in Verbindung mit oder zusätzlich zum Vorstehenden Verfahren ist ebenfalls möglich.

Die Erfindung betrifft hierbei ausdrücklich auch die in c1) erhaltene Bulkware und die in c2 erhaltenen Schaum-, Press-, Filz-, Vlies- und/oder Komposit-Produkte. So betrifft die Erfindung, z.B. als Bulkware, generell auch Holzfasern und/oder Cellulosefasern und/oder Holzpulver und/oder Cellulosepulver und/oder Holzgranulate und/oder Cellulosegranulate und/oder bestehend aus oder umfassend Polyolefin-basierte Stoffe der oben beschriebenen Art, die mit dem oben definierten Mittel zur Verminderung der Entflammbarkeit und/oder Brennbarkeit von Dämmmaterialien, Wandbelägen oder Bodenbelägen, insbesondere Flammschutzmittel und/oder Brandschutzmittel, enthaltend oder bestehend aus einer Kombination und/oder einem Gemisch Bs/Bx/S behandelt und getrocknet und mit Blähgraphit gemischt und/oder konfektioniert sind. Ebenso betrifft die Erfindung daraus hergestellte oder diese umfassende Produkte, die zu Schaum-, Press-, Filz- und/oder Komposit-Produkten weiterverarbeitet sind.

Eingesetzt werden kann das erfindungsgemäße Flamm- und/oder Brandschutzmittel insbesondere hervorragend zum Schutz von jedweden Holz-, Cellulose- und/oder Lignin-haltigen, faserigen Materialien und/oder diese umfassende oder daraus bestehende (Vor-)Produkte, und/oder (Vor-)Produkte bestehend aus oder umfassend Polyolefin-basierte Stoffe der oben beschriebenen Art. Infrage kommen, insbesondere für Dämmzwecke, Wandbeläge bzw. Bodenbeläge, erfindungsgemäße Anwendungen bzw. Produkte wie beispielsweise Holzfasern, faserigen holzhaltigen und/oder holzartigen Werkstoffe, und Holzfaserprodukten: z.B. Türen, Fenster, Parkett, Laminat, Vertäfelungen, Decken; Kisten, Holzregale, Möbel; Baumaterial aus Holz wie Sparren, Leisten, Holzfaser-Füllstoffe für Aussparrungen bzw. Hohlräume, Holzfaserprodukt-Anwendungen für Dachstühle oder Deckenstützen usw.; z.B. aus Holz- und/oder Cellulosefasern gefertigte Holzteile und/oder Wandungen von Wärmekabinen und Saunen), Holz- und/oder Cellulosefasern gefertigte Produkte, auch in Verbindung mit Textilen und Textilprodukten; mit Papier und Papierprodukten, Pappe, Karton, Kartonagen; Produkte bestehend aus oder umfassend Fasern und Gewebe, Kunst- und Naturfasern sowie Geweben damit; Komposit-Produkte aus Holz- und/oder Cellulosefasern und Kunststoffen und Kunststoffprodukten; aus Holz- und/oder Cellulosefasern gefertigte Isoliermaterialien und Isolierprodukte und/oder Komposit-Produkte damit, einschließlich thermische Isoliermaterialien und Isolierprodukte, Elektro- und/oder Kabelisolierungen und solche für elektrische Anlagen aller Art; Farben und Farbprodukte usw.; einschließlich von Verbundmaterialien und/oder Verbundwerkstoffen und/oder Werk- und/oder Baustoffe mit den vorstehend genannten Materialien und/oder Stoffen.

Besonders bevorzugt sind jedoch Dämmungen, Wandbeläge bzw. Bodenbeläge, Hierbei erweist sich die Erfindungsgemäße Verwendung von Blähgraphit als besonders vorteilhaft, da insbesondere bei vertikalen Dämmungen und vertikalen Wandbelägen für Brand- bzw. Flammschutzprüfungen vertikal Kanten-beflammt werden muss, um die geforderten Brandschutznachweise zu erbringen. Hierbei darf das beflammte vertikal angeordnete Material, also die vertikale Dämmung bzw der vertikale Wandbelag, weder schmelzen noch tropfen, um die geforderte Brandschutzprüfung und Brandschutzklasse zu bestehen. Dies ist im Stand der Technik bisher nicht gelungen, wie katastrophale Brände von insbesondere Styropor und auch von auf Holz- und Cellusose-Produkten beruhenden Dämmstoffen und Wandbelägen auch in jüngster Vergangenheit noch zeigen. Es ist bekannt, dass Flammen bei Bränden sich in der Regel sehr leicht von unten nach oben, also vertikal in die Höhe, ausbreiten. Im Brandfall kommt es dann zum Tropfen durch Verschmelzung von z.B. vom in den Holzfasern und/oder Cellulosefasern und/oder aus Holzpulvern und/oder Cellulosepulvern und/oder Holzgranulaten und/oder Cellulosegranulaten enthaltenen Bindemittel und/oder Leim, und speziell des in den Materialien und/oder (Vor-)Produkten enthaltenen Polyolefin-basierten Stoffes der oben beschriebenen Art. Hierdurch fließt bei vertikaler Anordnung, z.B. der Dämmstoffe und Wandbeläge, ständig aufschmelzendes, tropfendes Bindemittel, Leim und/oder Polyolefin von oben in die Kantenbeflammung herab und befeuert beständig die Flammenbildung und den Brand.

Durch die vorliegende Erfindung gelingt es nun erstmals, insbesondere durch die Verwendung von Blähgraphit nach Anspruch 1 in den oben beschriebenen Materialien und/oder (Vor-)Produkten bei der (vertikalen) Kantenbeflammung eine Verschmelzung bzw. ein Tropfen durch Verschmelzung des z.B. in den Holzfasern und/oder Cellulosefasern und/oder aus Holzpulvern und/oder Cellulosepulvern und/oder Holzgranulaten und/oder Cellulosegranulaten enthaltenen Bindemittels und/oder Leims, und speziell des in den Materialien und/oder (Vor-)Produkten enthaltenen Polyolefin-basierten Stoffes der oben beschriebenen Art, wirkungsvoll zu unterbinden und somit die Flammenbildung und die Ausbreitung eines Brandes zu verhindern, zumindest aber über einen ausreichenden Zeitraum hinweg soweit zu erschweren, bis Löschkräfte vor Ort weitere Brandbekämpfungsmaßnahmen ergreifen können.

In der weitesten Fassung der Erfindung, insbesondere bei, ggf. mit einem weiteren Flammschutz und/oder Brandschutzmittel vorbehandelten, Materialien und/oder (Vor-)Produkten, die aus insbesondere Bindemittel und/oder Leime enthaltenden Holzfasern und/oder Cellulosefasern und/oder aus Holzpulvern und/oder Cellulosepulvern und/oder Holzgranulaten und/oder Cellulosegranulaten bestehen oder diese umfassen, kann die Menge an Blähgraphit in einem weiten Mengenbereich variieren, wobei die Menge an Blähgraphit in den Blähgraphit-enthaltenden Materialien und/oder (Vor-)Produkten nicht mehr als 45 Gew.-% bezogen auf das gesamte Blähgraphit-enthaltende Material und/oder (Vor-)Produkt als 100 Gew.-%, beträgt. Weitere Mengen und Bereiche für Materialien und/oder (Vor-)Produkten, die aus Holzfasern (und/oder aus Holzpulvern und/oder Holzgranulaten) bestehen oder diese umfassen, sind weiter unten beschrieben.

Erfindungsgemäß beträgt der Anteil an Blähgraphit in den oben beschriebenen Materialien und/oder (Vor-)Produkten bzw. Verwendungen oder Verfahren, insbesondere in Ausgestaltungen bestehend aus oder umfassend Polyolefin-basierte Stoffe der oben beschriebenen Art, nicht mehr als 45 Gew.-%, vorzugsweise nicht mehr als 40 Gew.-%, weiter bevorzugt nicht mehr als 35 Gew.-%, und ganz besonders bevorzugt nicht mehr als 30 Gew.-%, jeweils bezogen auf das gesamte Material und/oder (Vor-)Produkt als 100 Gew.-%.

Erfindungsgemäß beträgt der Anteil an Blähgraphit in den oben beschriebenen Materialien und/oder (Vor-)Produkten bzw. Verwendungen oder Verfahren zumindest 1 Gew.-%, vorzugsweise zumindest 2 Gew.-%, weiter bevorzugt zumindest 3 Gew.-%, noch weiter bevorzugt zumindest 4 Gew.-%, und ganz besonders bevorzugt zumindest 5 Gew.-%, jeweils bezogen auf das gesamte Material und/oder (Vor-)Produkt als 100 Gew.-%.

Erfindungsgemäß liegt der Anteil an Blähgraphit in den oben beschriebenen Materialien und/oder (Vor-)Produkten bzw. Verwendungen oder Verfahren somit im Bereich von 1 Gew.-% bis 45 Gew.-%, von 2 Gew.-% bis 45 Gew.-%, von 3 Gew.-% bis 45 Gew.-%, von 4 Gew.-% bis 45 Gew.-%, und von 5 Gew.-% bis 45 Gew.-%. Vorzugsweise liegt der Anteil an Blähgraphit hierbei im Bereich von 1 Gew.-% bis 40 Gew.-%, von 2 Gew.-% bis 40 Gew.-%, von 3 Gew.-% bis 40 Gew.-%, von 4 Gew.-% bis 40 Gew.-%, und von 5 Gew.-% bis 40 Gew.-%. Weiter bevorzugt liegt der Anteil an Blähgraphit hierbei im Bereich von 1 Gew.-% bis 35 Gew.-%, von 2 Gew.-% bis 35 Gew.-%, von 3 Gew.-% bis 35 Gew.-%, von 4 Gew.-% bis 35 Gew.-%, und von 5 Gew.-% bis 35 Gew.-%. Ganz besonders bevorzugt liegt der Anteil an Blähgraphit hierbei im Bereich von 1 Gew.-% bis 30 Gew.-%, von 2 Gew.-% bis 30 Gew.-%, von 3 Gew.-% bis 30 Gew.-%, von 4 Gew.-% bis 30 Gew.-%, und von 5 Gew.-% bis 30 Gew.-%. Alle vorsethenden Gew.-%-Angaben beziehen sich jeweils auf das gesamte Material und/oder (Vor-)Produkt als 100 Gew.-%.

Hierbei kann das Blähgraphit gewünschtenfalls zusätzlich auch die Funktion eines (in der Regel anorganischen) Füllstoffs, wie z.B. Talkum, Kaolin oder andere, übernehmen und somit diesen Füllstoff anteilig ersetzen. Der Fachmann kann hierbei die jeweilige minimal erforderliche Menge an Blähgraphit zur Sicherstellung des Flamm- und/oder Brandschutzeffektes sowie der maximalen Menge an Blähgraphit zur Beibehaltung der erforderlichen oder erwünschten Füllstoffcharakteristika im Rahmen der oben angegebenen Mengen leicht ermitteln.

In der Patentanmeldung DE 10 2015 119 558.5 vom 12.11.2015 ist festgestellt worden, dass mit einem Flamm- und/oder Brandschutzmittel, welches lediglich aus Borsäure, Borax, Alkalichlorids, vorzugsweise Natriumchlorid, und gewünschtenfalls Harnstoff in der weiter unten angegebenen Zusammensetzung besteht oder enthält, die Zielsetzung für Holz und Cellulose, insbesondere auch für Holz- und/oder Cellulosefasern als solche bereits, vollständig erreichbar ist. Dieses Flamm- und/oder Brandschutzmittel enthält somit kein Ammoniumnitrat, keine halogenierten Anteile und keinerlei Melaminverbindungen und verzichtet in bevorzugten Ausführungen auch auf Harnstoff. Ein in diesem Sinne zusammengesetztes Flamm- und/oder Brandschutzmittel erfüllt alle Anforderungen einschließlich einer einfachen und sehr kostengünstigen Herstellbarkeit und ist für Holz und Cellulose, insbesondere auch für Holz- und/oder Cellulosefasern als solche, bereits besonders gut als Flamm- und/oder Brandschutzmittel wirksam.

Überraschenderweise ist erfindungsgemäß weiterhin festgestellt worden, dass das unerwünschte Nachglimmen von Produkten bestehend aus oder umfassend Holz- und/oder Cellulosefasern in der Praxis wirkungsvoll verhindert werden kann, sofern zusätzlich zum Mittel aus der deutschen Patentanmeldung DE 10 2015 119 558.5 vom 12.11.2015 Blähgraphit zum Einsatz kommt.

Blähgraphit wird erfindungsgemäß daher in Kombination mit dem nachfolgend beschriebenen Mittel nach DE 10 2015 119 558.5 verwendet.

Die Zusammensetzung des Flamm- und/oder Brandschutzmittels der DE 10 2015 119 558.5 zur Reduktion der Entflammbarkeit und/oder Brennbarkeit von Stoffen besteht aus einem Gemisch von Borsäure (H₃BO₃), Borax (Na₂B₄O₇^{∗}10H₂O), wenigstens einem Alkalichlorid, vorzugsweise Natriumchlorid; und gewünschtenfalls Harnstoff (CO(NH₂)₂) als fakultativer Bestandteil. Bevorzugt enthalten jedoch erfindungsgemäße Mittel keinen Harnstoff oder diesen nur in vergleichsweise geringen Mengen; d.h. dann beispielsweise bevorzugt in einer Menge von nur 0 bis 1,0 Gew.-Teile im nachstehend definierten erfindungsgemäßen Mittel.

So betrifft die Erfindung die Verwendung von Blähgraphit in Kombination mit einem weiteren Mittel zur Verminderung der Entflammbarkeit und/oder Brennbarkeit von Materialien, insbesondere Flammschutzmittel und/oder Brandschutzmittel, nach DE 10 2015 119 558.5, also ein weiteres Flammschutzmittel und/oder Brandschutzmittel enthaltend oder bestehend aus einer Kombination und/oder einem Gemisch von
a) 30 bis 70 Gew.-% Borsäure;
b) 30 bis 70 Gew.-% Borax;
c) ein Alkalichlorid, vorzugsweise Natriumchlorid, in einer Menge von weniger als 5 Gew.-%; und
d) gewünschtenfalls Harnstoff bis zu 5 Gew.-%;
jeweils bezogen auf die Kombination und/oder das Gemisch als 100 Gew.-%.

Die Erfindung betrifft ferner ein Mittel zur Verminderung der Entflammbarkeit und/oder Brennbarkeit von Materialien, insbesondere Flammschutzmittel und/oder Brandschutzmittel, umfassend oder bestehend aus einer Kombination von Blähgraphit mit einem weiteren anorganischen Flammschutzmittel und/oder Brandschutzmittel enthaltend oder bestehend aus einer Kombination und/oder einem Gemisch Bs/Bx/S von
a) 30 bis 70 Gew.-% Borsäure;
b) 30 bis 70 Gew.-% Borax;
c) ein Alkalichlorid, vorzugsweise Natriumchlorid, in einer Menge von weniger als 5 Gew.-%; und
d) gewünschtenfalls Harnstoff bis zu 5 Gew.-%;
jeweils bezogen auf die Kombination und/oder das Gemisch als 100 Gew.-%. Die Abkürzung "Bs/Bx/S" steht hierbei und im Folgenden für "Borsäure/Borax/Salz" für die obligatorischen Komponenten a), b) und c) des Mittels nach DE 10 2015 119 558.5.

Erfindungsgemäß beträgt der Anteil der Kombination und/oder des Gemisches "Bs/Bx/S" (als Trockengewicht) in den oben beschriebenen Materialien und/oder (Vor-)Produkten bzw. Verwendungen oder Verfahren, nicht mehr als 15 Gew.-%, vorzugsweise nicht mehr als 10 Gew.-%, weiter bevorzugt nicht mehr als 5 Gew.-%, und ganz besonders bevorzugt nicht mehr als 3 Gew.-%, jeweils bezogen auf das gesamte Material und/oder (Vor-)Produkt als 100 Gew.-%.

Erfindungsgemäß beträgt der Anteil der Kombination und/oder des Gemisches "Bs/Bx/S" in den oben beschriebenen Materialien und/oder (Vor-)Produkten bzw. Verwendungen oder Verfahren, zumindest 0,5 Gew.-%, vorzugsweise zumindest 1 Gew.-%, weiter bevorzugt zumindest 1,5 Gew.-%, noch weiter bevorzugt zumindest 2 Gew.-%, und ganz besonders bevorzugt zumindest 3 Gew.-%, jeweils bezogen auf das gesamte Material und/oder (Vor-)Produkt als 100 Gew.-%.

Erfindungsgemäß liegt der Anteil der Kombination und/oder des Gemisches "Bs/Bx/S", in den oben beschriebenen Materialien und/oder (Vor-)Produkten bzw. Verwendungen oder Verfahren somit im Bereich von 0,5 Gew.-% bis 15 Gew.-%, von 1 Gew.-% bis 15 Gew.-%, von 1,5 Gew.-% bis 15 Gew.-%, von 2 Gew.-% bis 15 Gew.-%, und von 3 Gew.-% bis 15 Gew.-%. Vorzugsweise liegt der Anteil der Kombination und/oder des Gemisches "Bs/Bx/S", hierbei im Bereich von 0,5 Gew.-% bis 10 Gew.-%, von 1 Gew.-% bis 10 Gew.-%, von 1,5 Gew.-% bis 10 Gew.-%, von 2 Gew.-% bis 10 Gew.-%, und von 3 Gew.-% bis 10 Gew.-%. Weiter bevorzugt liegt der Anteil der Kombination und/oder des Gemisches "Bs/Bx/S", hierbei im Bereich von 0,5 Gew.-% bis 5 Gew.-%, von 1 Gew.-% bis 5 Gew.-%, von 1,5 Gew.-% bis 5 Gew.-%, von 2 Gew.-% bis 5 Gew.-%, und von 3 Gew.-% bis 5 Gew.-%. Ganz besonders bevorzugt liegt der Anteil der Kombination und/oder des Gemisches "Bs/Bx/S", hierbei im Bereich von 0,5 Gew.-% bis 3 Gew.-%, von 1,5 Gew.-% bis 3 Gew.-%, von 2 Gew.-% bis 3 Gew.-%. Alle vorsethenden Gew.-%-Angaben beziehen sich jeweils auf das gesamte Material und/oder (Vor-)Produkt als 100 Gew.-%.

Hierbei kann die Kombination und/oder das Gemisches "Bs/Bx/S", gewünschtenfalls zusätzlich auch die Funktion eines (in der Regel anorganischen) Füllstoffs, wie z.B. Talkum, Kaolin oder andere, übernehmen und somit diesen Füllstoff anteilig ersetzen. Der Fachmann kann hierbei die jeweilige minimal erforderliche Menge der Kombination und/oder des Gemisches "Bs/Bx/S", zur Sicherstellung des Flamm- und/oder Brandschutzeffektes sowie der maximalen Menge der Kombination und/oder des Gemisches "Bs/Bx/S", zur Beibehaltung der erforderlichen oder erwünschten Füllstoffcharakteristika im Rahmen der oben angegebenen Mengen leicht ermitteln.

Die Vorteile der genannten Zusammensetzung nach DE 10 2015 119 558.5 kann man bei Einsatz des erfindungsgemäßen Mittels sowohl in trockener bzw. fester Form erhalten, als auch bei Einsatz in gelöster Form, beispielsweise in einem wässrigen Lösungsmittel und insbesondere in wässriger Lösung. Zum Einsatz des Mittels empfiehlt es sich ggf., die trockene bzw. feste Form des Mittels in einem wässrigen Lösungsmittel aufzulösen, um es auf das zu behandelnde Material aufzubringen und/oder in das zu behandelnde Material einzubringen. Hierdurch wird die Aufnahmefähigkeit für das Mittel im zu behandelnden Material erreicht. Beide Verwendungsvarianten des Mittels und die Herstellungsverfahren dieser Mittel werden im Rahmen der vorliegenden Erfindung beschrieben. Es hat sich gezeigt, dass gerade durch die vorstehende Kombination und/oder das Gemisch mit den angegebenen Mengenbereichen eine überraschend einfache und dennoch enorm wirksame Lösung für den nach wie vor existierenden enormen Bedarf an einfach, kostengünstig und umweltfreundlich herstellbaren, verarbeitbaren und verwendbaren Mitteln zur Verminderung der Entflammbarkeit und/oder Brennbarkeit von diversen Materialien, insbesondere als Flammschutzmittel und/oder Brandschutzmittel, bereitgestellt werden konnte.

Das vorstehende trockene bzw. feste erfindungsgemäße Mittel kann in jedweder festen Form, z.B. je nach Verwendungszweck, als Einzelbestandteile zur individuellen Abmischung in den genannten Mengen oder auch vorgemischt bereitgestellt werden. Erfindungsgemäß übliche trockene bzw. feste Formen sind z.B. Pulver, Granulate, Pellets, und sie können in amorpher, kristalliner und/oder teilkristalliner Form, ggf. auch in Form üblicher Hydrate vorliegen. Gewünschtenfalls kann das vorstehende trockene bzw. feste erfindungsgemäße Mittel granuliert oder pelletiert sein. Eine Umhüllung der trockenen bzw. festen granulierten oder pelletierten erfindungsgemäßen Mittel zum Schutz vor Feuchtigkeit ist nicht erforderlich, aber im Einzelfall für spezielle Anwendungen auch nicht ausgeschlossen.

Die Erfindung und deren Vorteile können daher in überraschenderweise auch mit Bulkware der genannten Bestandteile verwirklicht werden. Die Erfindung betrifft daher auch ein Mittel zur Verminderung der Entflammbarkeit und/oder Brennbarkeit von Materialien, insbesondere Flammschutzmittel und/oder Brandschutzmittel, enthaltend oder bestehend aus der oben genannten Kombination und/oder dem oben genannten Gemisch in trockener bzw. fester und unbeschichteter Form. Zur Verbesserung der Fließfähigkeit können jedoch übliche Gleitmittel für pulver- oder partikelförmige Substanzen in an sich üblichen Mengen enthalten sein.

Das trockene bzw. feste erfindungsgemäße Mittel kann hierbei in jedweder Art von Klein- und Großgebinden, insbesondere auch industriell üblichen Gebinden wie z.B. Fässern, Säcken, Bigpacks usw., abgepackt, geliefert und/oder bevorratet, und auch im Silo oder in Containern bevorratet, werden.

Die Entflammbarkeit und/oder Brennbarkeit der diversen, oben bereits genannten, zu schützenden Materialen und/oder Stoffe kann sofort auf einfachem Wege herabgesetzt werden, indem man auf diese Materialen und/oder Stoffe eine wässrige Lösung des erfindungsgemäßen Mittels aufbringt und/oder diese damit tränkt und/oder darin taucht. Als Materialien seien hier beispielhaft nochmals materialtypisch erwähnt, ohne hierdurch die obige Aufzählung einschränken zu wollen: Holz, Papier, Textilien, Fasern, Gewebe. Auch Kunststoffe können als Material ggf. mit diesem Mittel behandelt werden.

Die Menge der Ausgangsstoffe Borsäure, Borax, Alkalichlorid, vorzugsweise Natriumchlorid; und gegebenenfalls Harnstoff im genannten Mittel kann je nach dem zu schützenden Material und/oder Stoff, von welchem die Entflammbarkeit und/oder Brennbarkeit reduziert werden soll, innerhalb der erfindungsgemäß in den Ansprüchen angegebenen bzw. hier beschriebenen Mengenbereiche variieren.

Die bevorzugte Menge im erfindungsgemäßen Mittel, als Kombination und/oder Gemisch, von Borsäure (H₃BO₃) beträgt laut der Erfindung 30-70 Gew.-%; von Borax (Na₂B₄O₇^{∗}10H₂O) 30-70 Gew.-%; und wenigstens ein Alkalichlorid, vorzugsweise Natriumchlorid, das jedoch in einer Menge von weniger als 5 Gew.-% vorliegt. Der Alkalichloridgehalt ist sehr vorteilhaft für die erfindungsgemäße Wirkung und Anwendung, sollte jedoch weniger als 5 Gew.-% betragen, um Kristallbildung beim längeren Stehen von wässrigen Lösungen der Kombination und/oder des Gemisches zu vermeiden. Die Gew.-%-Angaben sind auf die Kombination und/oder das Gemisch als 100 Gew.-% bezogen. Im erfindungsgemäßen Mittel liegt daher das Alkalichlorid, vorzugsweise Natriumchlorid, somit in einer Menge von weniger als 5 Gew.-% vor, vorzugsweise in einer Menge von weniger als 4,5 Gew.-%, insbesondere in einer Menge von weniger als 4 Gew.-%, weiter bevorzugt in einer Menge von bis zu 3,5 Gew.-%, insbesondere in einer Menge von bis zu 3 Gew.-%, noch weiter bevorzugt in einer Menge von bis zu 2,5 Gew.-%, insbesondere in einer Menge von bis zu 2 Gew.-%, und besonders bevorzugt in einer Menge von bis zu 1,5 Gew.-%, insbesondere in einer Menge von bis zu 1 Gew.-%; jeweils bezogen auf die Kombination und/oder das Gemisch als 100 Gew.-%. Der Mindestgehalt an Alkalichlorid, vorzugsweise Natriumchlorid, liegt insbesondere bei 0,1 Gew.-%, vorzugsweise bei 0,2 oder 0,3 oder 0,4 Gew.-%, weiter bevorzugt bei 0,5 Gew.-%; ebenfalls jeweils bezogen auf die Kombination und/oder das Gemisch als 100 Gew.-%.

In Mengenbereichen ausgedrückt kann im erfindungsgemäßen Mittel das Alkalichlorid, vorzugsweise Natriumchlorid, somit in einer Menge von 0,1 Gew.-% bis zu weniger als 5 Gew.-%, vorzugsweise von 0,2 oder 0,3 oder 0,4 Gew.-% bis zu weniger als 5 Gew.-%, weiter bevorzugt von 0,5 Gew.-% bis zu weniger als 5 Gew.-%, jeweils bezogen auf die Kombination und/oder das Gemisch als 100 Gew.-%, vorliegen. Im erfindungsgemäßen Mittel kann das Alkalichlorid, vorzugsweise Natriumchlorid, auch in einer Menge von 0,1 Gew.-% bis zu weniger als 4,5 Gew.-%, vorzugsweise von 0,2 oder 0,3 oder 0,4 Gew.-% bis zu weniger als 4,5 Gew.-%, weiter bevorzugt von 0,5 Gew.-% bis zu weniger als 4,5 Gew.-% - insbesondere hierbei jeweils bis zu einer Menge von weniger als 4 Gew.-%, vorliegen; jeweils bezogen auf die Kombination und/oder das Gemisch als 100 Gew.-%.

Im erfindungsgemäßen Mittel kann das Alkalichlorid, vorzugsweise Natriumchlorid, weiterhin in einer Menge von 0,1 Gew.-% bis zu 3,5 Gew.-%, vorzugsweise von 0,2 oder 0,3 oder 0,4 Gew.-% bis zu 3,5 Gew.-%, weiter bevorzugt von 0,5 Gew.-% bis zu 3,5 Gew.-% - insbesondere hierbei jeweils bis zu einer Menge von bis zu 3 Gew.-%, vorliegen; jeweils bezogen auf die Kombination und/oder das Gemisch als 100 Gew.-%. Oder im erfindungsgemäßen Mittel kann das Alkalichlorid, vorzugsweise Natriumchlorid, weiterhin in einer Menge von 0,1 Gew.-% bis zu 2,5 Gew.-%, vorzugsweise von 0,2 oder 0,3 oder 0,4 Gew.-% bis zu 2,5 Gew.-%, weiter bevorzugt von 0,5 Gew.-% bis zu 2,5 Gew.-% - insbesondere hierbei jeweils bis zu einer Menge von bis zu 2 Gew.-%, vorliegen; jeweils bezogen auf die Kombination und/oder das Gemisch als 100 Gew.-%.

Bevorzugt liegt im erfindungsgemäßen Mittel kann das Alkalichlorid, vorzugsweise Natriumchlorid, weiterhin in einer Menge von 0,1 Gew.-% bis zu 1,5 Gew.-%, vorzugsweise von 0,2 oder 0,3 oder 0,4 Gew.-% bis zu 1,5 Gew.-%, weiter bevorzugt von 0,5 Gew.-% bis zu 1,5 Gew.-% - insbesondere hierbei jeweils bis zu einer Menge von bis zu 1 Gew.-%, vor; jeweils bezogen auf die Kombination und/oder das Gemisch als 100 Gew.-%.

Das erfindungsgemäße Mittel kann entweder besonders bevorzugt frei von Harnstoff (CO(NH₂)₂) sein oder es kann gewünschtenfalls Harnstoff in einer Menge von bis zu 5 Gew.-% (0 bis zu 5 Gew.-%), bevorzugt in einer Menge bis zu 4 Gew.-% (0 bis zu 4 Gew.-%), weiter bevorzugt in einer Menge bis zu 3, 2 oder 1 Gew.-% (0 bis zu 3, 2 oder 1 Gew.-%), und ganz besonders bevorzugt in einer Menge von 0 bis zu maximal 1 Gew.-%, umfassen.

Das vorstehende Mittel nach DE 10 2015 119 558.5 wird erfindungsgemäß in Kombination mit Blähgraphit verwendet.

Blähgraphit, auch "expandierbarer Graphit" genannt, wird aus dem natürlich vorkommenden Mineral Graphit hergestellt. Eine Graphitflocke besteht aus Schichten von wabenförmig angeordneten Kohlenstoffatomen. Innerhalb der Schichten sind die Atome durch kovalente Bindungen sehr fest verbunden. Zwischen den Schichten herrschen nur schwache Bindungskräfte, so dass Moleküle zwischen die Graphitschichten eingelagert (interkaliert) werden können. Durch die Einlagerung von Säuren, üblicherweise Schwefelsäure, wird Graphit in Blähgraphit umgewandelt.

Wird Blähgraphit erhitzt, expandieren die Graphitflocken je nach Qualität, ab einer Temperatur von ca. 140 °C auf ein Vielfaches des ursprünglichen Volumens an. Durch das Verdampfen der eingelagerten Verbindungen werden die Graphitschichten ziehharmonikaartig auseinandergetrieben. Die expandierten Flocken haben eine "würmchenartige" Erscheinungsform und sind üblicherweise mehrere Millimeter lang. Physikalische Eigenschaften von Blägraphit: Kohlenstoffgehalt 85-99 Gew.-%; Expansionsrate 30 - 400 ccm/g; Teilchengröße 80 % < 75 µm - 80 % > 500 µm; Starttemperatur 140 - 230 °C.

Zur Herstellung Blähgraphit werden Naturgraphitflocken in einem Bad aus Säure und Oxidationsmittel behandelt. Üblicherweise angewandte Oxidationsmittel sind Wasserstoffperoxid, Kaliumpermanganat und Chromsäure, wobei Letzteres Nachwirkungen mit sich ziehen kann. Als einzulagernde Verbindung werden meist konzentrierte Schwefelsäure oder Salpetersäure verwendet, wobei die Umsetzung bei Temperaturen von 30 °C bis 130 °C während bis zu vier Stunden erfolgt. Nach der Einwirkzeit werden die Flocken mit Wasser gewaschen und anschließend getrocknet. Starttemperatur und Expansionsrate hängen von der Feinheit des Graphits ab. Eine der Hauptanwendungen von Blähgraphit stellt der Flammschutz dar. Bei Hitzeeinwirkung expandiert der Blähgraphit und bildet eine Intumeszenzschicht auf der Materialoberfläche. Dies verlangsamt die Brandausweitung und wirkt den für den Menschen gefährlichsten Brandfolgen, nämlich der Bildung toxischer Gase und Rauch, entgegen.

Die Anwendung im Zusammenhang mit Flamm- und/oder Brandschutzmitteln, insbesondere im Bereich von Holzfaser- und/oder Cellulosefaser-Produkten war bisher jedoch nicht bekannt und wir hier vom Erfinder erstmals vorgestellt. Die Menge des im Rahmen der hier vorliegenden Erfindung zu verwendenden Blähgraphits wird der Fachmann so bemessen, dass ein Glimmen und/oder Nachglimmen wirkungsvoll verhindert wird und die Expansionsrate auf das je nach Anwendung bzw. Holzfaser- und/oder Cellulosefaser-Produkt gewünschte und/oder vertretbare Maß eingestellt wird.

Das Blähgraphit kann bei der Herstellung von flamm- und/oder brandgeschützten Produkten bestehend aus oder umfassend Holzfaser- und/oder Cellulosefaser-Materialien erfindungsgemäß als Gemisch zusammen mit dem oben beschriebenen Flamm- und/oder Brandschutzmittel nach DE 10 2015 119 558.5 eingesetzt werden, was anhand von zwei beispielhaften Ausführungen nachfolgend erläutert werden soll.

Bezogen auf Gewichtsmenge der eingesetzten, ggf. vorbehandelten, Holzfasern als 100 Gew.-% kann die Menge an Blähgraphit in einem weiten Mengenbereich, z.B. bis zu 60 Gew.-% Blähgraphit bezogen auf die Gewichtsmenge der eingesetzten Holzfasern als 100 Gew.-%, variiert werden; die Mindestmenge an Blähgraphit kann z.B. 0,1 Gew.-%, 0,5 Gew.-%, 1 Gew.-%, 2 Gew.-%, 3 Gew.-%, 4 Gew.-%, 5 Gew.-%, 10 Gew.-%, 15 Gew.-%, 20 Gew.-% oder mehr, betragen, jeweils bezogen auf die Gewichtsmenge der eingesetzten Holzfasern als 100 Gew.-%; Zwischenwerte der genannten Mindestmengen in Gew.-% sind ebenfalls möglich, z.B. in 0,1 Gew.-%-Schritten, 0,5 Gew.-%-Schritten und/oder 1 Gew.-%-Schritten. Ebenso kann die die Obermenge an Blähgraphit kann z.B. 55 Gew.-%, 50 Gew.-%, 45 Gew.-%, 40 Gew.-%, 35 Gew.-%, 30 Gew.-%, oder weniger, betragen, jeweils bezogen auf die Gewichtsmenge der eingesetzten Holzfasern als 100 Gew.-%; Zwischenwerte der genannten Obermengen in Gew.-% sind ebenfalls möglich, z.B. in 0,1 Gew.-%-Schritten, 0,5 Gew.-%-Schritten und/oder 1 Gew.-%-Schritten.

Insbesondere kann die Menge an Blähgraphit im Bereich von 0,1 Gew.-% bis 60 Gew.-%, vorzugsweise 1 Gew.-% bis 60 Gew.-%, besonders bevorzugt 5 Gew.-% bis 60 Gew.-%, weiter bevorzugt 10 Gew.-% bis 60 Gew.-%, noch weiter bevorzugt 15 Gew.-% bis 60 Gew.-%, und ganz besonders bevorzugt 20 Gew.-% bis 60 Gew.-%, liegen jeweils bezogen auf die Gewichtsmenge der eingesetzten Holzfasern als 100 Gew.-%. Zwischenwerte der genannten Bereiche von Mindestmenge und Obermenge in Gew.-% sind ebenfalls möglich, z.B. in 0,1 Gew.-%-Schritten, 0,5 Gew.-%-Schritten und/oder 1 Gew.-%-Schritten jeweils unabhängig voneinander der von Mindestmenge und Obermenge.

Hierbei kam Polymeres Diphenylmethandiisocyanat (PMDI) wird als Bindemittel für die Fasern zum Einsatz. Polymeres Diphenylmethandiisocyanat (PMDI) auch Technisches MDI genannt, ist Stoffgemisch aus Methylendiphenylisocyanaten und homologer aromatischer Polyisocyanaten. Die Bezeichnung "Polymeres Diphenylmethandiisocyanat" ist fälschlich, es handelt sich nicht um ein Polymer, sondern das Stoffgemisch enthält Verbindungen mit mehreren (typischerweise bis 6) Phenylengruppen, die je eine IsocyanatGruppe tragen. Häufige Handelsbezeichnung ist auch Polymethylenpolyphenylisocyanat. PMDI wird als Bindemittel in Holzwerkstoffplatten, insbesondere bei OSB-Platten eingesetzt und ist ein Ausgangsstoff zur Herstellung von Polyurethanen. Die technische Herstellung erfolgt durch Phosgenierung von 4,4'-Diaminodiphenylmethan (ein MDA) und seiner Homologen. Dieses Gemisch selbst wird wiederum durch Kondensation von Anilin mit Formaldehyd hergestellt. Zusammensetzung und Eigenschaften des PMDI bezüglich Reaktivität und damit der Einsetzbarkeit als Bindemittel werden im Wesentlichen durch folgende Faktoren beeinflusst: Anteile der MDI-Isomeren (4,4'-MDI, 2,4'-MDI, 2,2'-MDI); Molmassenverteilung. PMDI ist eine braune, sehr schwer entzündliche Flüssigkeit (Flammpunkt über 200 °C), die eine höhere Dichte als Wasser hat. Der Schmelzpunkt liegt bei ca. -24 °C. Bei 20 °C beträgt die Dichte rund 1,23 g·cm⁻³. Hinsichtlich Holzspanwerkstoffe mit PMDI weist PMDI im Vergleich zu anderen in der Holzwerkstoffindustrie eingesetzten Klebstoffen einige Vorteile auf, die den höheren Preis durchaus rechtfertigen, gerade für Anwendungen die höhere Anforderungen an Feuchtebeständigkeit oder Formaldehyd-Emission stellen: Hydrolysebeständigkeit; frei von Formaldehyd; niedrigerer Bindemittelbedarf.

In einer beispielhaften Ausführungsvariante wurden Holzfasern (mit Restfeuchte) in einen Betonmischer eingefüllt und darin mit zudosiertem Blähgraphit (ein weiter Bereich von 1 Gew.-% - 60 Gew.-% Zusatz Blähgraphit ist möglich) durchmischt. Dann wurde eine PMDI-Lösung aufgesprüht, das Mischgut in eine Pressform eingefüllt und mit 170 Tonnen bei 200°C zu einer Platte gepresst. Das so erzeugte Holzfaser-Erzeugnis hat ausreichende Festigkeit und zeigt nach 10 Min. Beflammung kein Brennen, kein Nachglühen, Die Temperatur der Brandfläche sank schlagartig. Blähgraphit wirkt intumiszierend und bläht an der Brandstelle auf, verhindert das Entzünden der Cellulose bzw. Holzfasern, lässt keinen Temperaturanstieg ins Innere der Holzfaserplatte zu, erlöscht sofort nach Entfernen der Flamme, und glüht keineswegs nach. Somit wäre eine Einstufung in die Brandschutzgruppe B1 kein Problem, ggf. könnte es auch für A1 reichen, sofern Blähgraphit beim Blähen nicht übermäßig in Ascheform entweicht und somit das Produkt nicht wesentlich an Gesamtgewicht verliert.

In einer beispielhaften Ausführungsvariante wurden Holzfasern zunächst in Borsäure/Borax/Salz Lösung eingelegt bzw. vollständig eingetränkt und diese danach wieder getrocknet. Dann wurden die behandelten Holzfasern wie in der vorherigen Ausführungsvariante in einen Betonmischer eingefüllt und mit ebenfalls mit PMDI besprüht, danach in eine Pressform eingefüllt und mit 170 Tonnen bei 200 °C zu Platten gepresst. Die Festigkeit der Holzfaserplatte war ebenfalls sehr gut, sie brennt nicht, die Brandfläche strahlt noch etwas Temperatur aus, das Nachglühen ist sehr gering und nach 20 Min. konnte kein Nachglühen mehr beobachtet werden, Die Temperatur nahm rasch ab, und eventuell Glimmstellen erloschen vollständig.

Die vorteilhaften Wirkungen im Zusammenhang mit Blähgraphit wird im Beispiel 9 dieser Anmeldung beispielhaft ausführlicher illustriert.

Die vorliegende Erfindung stellt daher eine überraschend einfache Kombination und/oder einfaches Gemisch von Blähgraphit zusammen mit dem Mittel nach DE 10 2015 119 558.5 zur Verminderung der Entflammbarkeit und/oder Brennbarkeit von Produkten aus Holz- und/oder Cellulosefaser-Materialien, insbesondere ein Flammschutzmittel und/oder Brandschutzmittel, zur Verfügung, das im Gegensatz zu den materialspezifischen Mitteln des Standes der Technik überraschenderweise ein deutlich verbreitertes Anwendungsspektrum ermöglicht. Beispielsweise ist es somit nur minimalem Anpassungsaufwand für das jeweilige Einsatzgebiet und für vielfältige Anwendungsgebiete geeignet. Eingesetzt werden kann das erfindungsgemäße Flamm- und/oder Brandschutzmittel somit wie oben bereits erwähnt zum Schutz von Cellolose- und/oder Lignin-haltigen, faserigen Materialien wie beispielsweise Holzfasern, faserigen holzhaltigen und/oder holzartigen Werkstoffe, und Holzfaserprodukten, und entsprechenden Anwendungen, in denen Cellolose- und/oder Lignin-haltigen, faserigen Materialien und damit gefertigte Produkte zum Einsatz kommen.

Die Erfindung betrifft, insbesondere wie oben bereits als bevorzugt genannt für die Anwendungen Dämmung, Wandbeläge bzw. Bodenbeläge, somit auch die mit dem oben beschrieben erfindungsgemäßen Mittel, insbesondere Flamm- und/oder Brandschutzmittel, behandelten Materialien, wie insbesondere Cellolose- und/oder Lignin-haltigen Materialien wie beispielsweise Holz, holzhaltigen und/oder holzartigen Werkstoffe, und Holzprodukten (z.B. Türen, Fenster, Parkett, Laminat, Vertäfelungen, Decken; Kisten, Holzregale, Möbel; Baumaterial aus Holz wie Sparren, Leisten, Holz für Dachstühle oder Deckenstützen usw.; z.B. Holzteile und/oder Wandungen von Wärmekabinen und Saunen), von Textilen und Textilprodukten; von Papier und Papierprodukten, Pappe, Karton, Kartonagen; Fasern und Gewebe, Kunst- und Naturfasern sowie Geweben damit; Kunststoffen und Kunststoffprodukten; Isoliermaterialien und Isolierprodukte, einschließlich thermische Isoliermaterialien und Isolierprodukte, Elektro- und/oder Kabelisolierungen und solche für elektrische Anlagen aller Art; Farben und Farbprodukte usw.; einschließlich von Verbundmaterialien und/oder Verbundwerkstoffen und/oder Werk- und/oder Baustoffe mit den vorstehend genannten Materialien und/oder Stoffen.

Die Erfindung betrifft auch Erzeugnisse und/oder Verbundmaterialien und/oder Verbundwerkstoffe mit den vorstehenden Materialien oder Stoffen, die Herstellung des Mittels und Methoden bzw. Vorgänge unter Verwendung des Mittels und/oder der entsprechenden Kombination seiner Einzelbestandteile oder als fertige Vorabmischung in den genannten Mengenbereichen zur Reduktion der Entflammbarkeit und/oder Brennbarkeit.

Die vorliegende Erfindung betrifft auch die Verwendung eines der vorstehend definierten und beschriebenen Mittels zur Verminderung der Entflammbarkeit und/oder Brennbarkeit von Materialien, insbesondere die Verwendung als Flammschutzmittel und/oder Brandschutzmittel, für vielfältige Anwendungsgebiete, die Materialien mit Ausrüstung durch ein Flammschutzmittel und/oder Brandschutzmittel, z.B. aufgrund gesetzlicher Vorschriften, zwingend erfordern oder bei denen die Ausrüstung durch ein Flammschutzmittel und/oder Brandschutzmittel zur Erhöhung der Sicherheit wünschenswert ist, wie insbesondere, jedoch nicht einschränkend, für insbesondere faserige Materialien aus Holz- und/oder Celluslose und daraus bestehende oder diese umfassende Produkte, wozu auf die obige Aufzählung von Materialien und/oder die genannten Einsatzgebiete verwiesen wird.

Das neue erfindungsgemäße Mittel kann je nach Art der Materialien bzw. Stoffe im Oberflächenbereich der zu schützenden Materialien bzw. Stoffe aufgetragen und/oder aufgesprüht werden und/oder die Materialien bzw. Stoffe können mit dem erfindungsgemäßen Mittel in Form einer wässrigen und/oder alkoholischen Lösung getaucht und/oder getränkt werden. Die zu behandelnden Materialien können daher sowohl während deren Herstellung als auch nach deren Herstellung mit Blick auf verschiedene jeweilige Einsatzzwecke der Materialien in sehr flexibler Weise ausgerüstet werden. Es kann also chargenweise je nach Vermarktungs- und Anwendungszweck des jeweiligen Materials entschieden werden, ob das Material unbehandelt hergestellt und erst danach gewünschtenfalls oder bereits bei dessen Herstellung mit dem erfindungsgemäßen Mittel in frei wählbarer Menge ausgerüstet werden soll. Der Fachmann kennt die jeweiligen für das zu schützende Material und/oder Stoff geeigneten Methoden bzw. Verfahren, um ein Mittel auf das jeweilige Material und/oder Stoff aufzutragen und/oder in dieses einzubringen und/oder damit dieses Mittel vom jeweiligen Material und/oder Stoff aufgenommen wird.

Entsprechend den bevorzugten Merkmalen kann dieses Flammschutzmittel und/oder Brandschutzmittel als Granulat oder auch in der Form einer wässrigen Lösung bereitgestellt werden.

So betrifft die Erfindung auch ein Mittel der oben beschriebenen Art, welches sich dadurch auszeichnet, dass es in fester Form, vorzugsweise als Pellet oder Granulat, vorliegt.

Weiterhin betrifft die Erfindung ein Mittel der oben beschriebenen Art, welches sich dadurch auszeichnet, dass es in einem wässrigen Lösungsmittel, vorzugsweise in Wasser, gelöst vorliegt.

In besonders zweckmäßiger Ausgestaltung zeichnet sich das erfindungsgemäße Mittel der oben beschriebenen Art dadurch aus, dass 50 bis 200 g, vorzugsweise 75 bis 125 g, der festen Kombination und/oder des festen Gemisches (Feststoffgemisch) des Mittels wie oben definiert in einer Menge des wässrigen Lösungsmittels, vorzugsweise Wasser, bezogen auf 1000 g Gesamtlösung gelöst vorliegen.

Zur Anwendung wird somit eine Lösung der oben beschriebenen Art der festen Kombination und/oder des festen Gemisches (Feststoffkombination bzw. -gemisch) der Komponente A des Mittels enthaltend die definierte Menge des flamm- und/oder brandschützenden Feststoffs in 1 I des wässrigen Lösungsmittels, vorzugsweise Wasser, gelöst hergestellt.

Gegebenenfalls wird der jeweilige Lösevorgang durch Erwärmen unterstützt. So erfolgt z.B. das Zusammenmischen der Bestandteile zweckmäßigerweise unter Erwärmung auf eine Temperatur bis zu ca. 60°C. Ein Sieden bzw. Kochen des Lösungsmittels wird als unangebracht angesehen (Energieaufwand und Lösungsmittelverlust). Geeignete Rührwerke können den Lösevorgang in an sich bekannter Weise unterstützen. Die fertige Lösung des erfindungsgemäßen Mittels wird auf das Material bzw. den Stoff aufgetragen, z.B. durch Gießen, Sprühen oder Streichen, oder es wird mit der fertige Lösung getränkt, getaucht oder gemischt, oder auf diese Weisen bereits bei der Herstellung des Materials in dieses eingebracht.

In der Anwendung lässt man das erfindungsgemäße Mittel eine für das jeweilige Material übliche Zeit einwirken und/oder einziehen und kann diese dann in gewohnter, dem Fachmann geläufiger Weise zum flamm- und/oder brandgeschützten Material oder Produkt (Erzeugnis, Verbundmaterial, Verbundwerkstoff, Isoliermaterial, Baustoff usw.) weiterverarbeiten.

Die erfindungsgemäßen Mittel zeichnen sich gegenüber den im Stand der Technik bekannten Zusammensetzungen durch überraschende Verbesserungen und Wirkungen aus. So konnte der Fachmann die vorteilhafte Wirkung des Bestandteils Alkalichlorid, besonders bevorzugt Natriumchlorid, aus dem Stand der Technik nicht entnehmen bzw. es gab auch keine Hinweise, aus denen er zur Beifügung von Alkalichlorid, besonders bevorzugt Natriumchlorid, angeregt worden wäre. Dies gilt insbesondere für die erfindungsgemäßen Mittel, die frei von Harnstoff sind, oder solche erfindungsgemäßen Mittel, die vergleichsweise wenig Harnstoff und auch keine anderen Weichmacher enthalten. Darüber hinaus hat sich auch gezeigt, dass für diese Alkalichlorid, besonders bevorzugt Natriumchlorid, enthaltenden erfindungsgemäßen Mittel, die hier beschriebenen Mengenbereiche und Verhältnisse vorteilhaft wirken, z.B. auch indem diese mit den hier beschrieben beschriebenen, zu behandelnden Materialien auf vielfältige Weise kombiniert werden können.

Wie bereits verschiedentlich hier angesprochen, weist die Erfindung eine Reihe von Vorteilen im Vergleich zum Stand der Technik auf, von denen einige weitere stellvertretend und beispielhaft erwähnt werden sollen. Die Bestandteile und die Zusammensetzung der Erfindung haben keinerlei umweltgefährdende Eigenschaften. Rauch und Abgase, die bei der Verbrennung der Erfindung entstehen sind nicht umweltverschmutzend. Materialien und Stoffe, die von der Erfindung benetzt bzw. in der Erfindung getränkt werden, sind weder von vorzeitigem Verfall, noch von Qualitätsminderungen betroffen, d.h. die Erfindung hat keinerlei Auswirkungen auf die ursprünglichen Eigenschaften des zu schützendem Materials und/oder Stoffes.

Ein weiterer Vorteil ist, dass die Bestandteile der Erfindung leicht und günstig zu erwerben sind, und die Herstellung des Flammschutz- und/oder Brandschutzmittels einfach ist und hohe Produktionsraten erzielt.

Mit geringfügigen Modifikationen der Formel der Zusammensetzung der Erfindung, ist es möglich eine Reduktion der Entflammbarkeit und/oder Brennbarkeit von anderen industriellen Produkten, wie Holz, Papier und anderen Zellstoffen, zu erzielen.

Die Entflammbarkeit und/oder Brennbarkeit von Stoffen, Textilien, Fasern und Geweben kann sofort auf einfachem Wege herabgesetzt werden, indem man diese in einer wässrigen Lösung gemäß der Erfindung tränkt bzw. diese aufbringt.

Die Komposition der Erfindung hinterlässt keinerlei unerwünschte Spuren auf den behandelten Materialien und/oder Stoffen.

Es ist auch möglich, eine wässrige Lösung mit der Zusammensetzung der Erfindung in Form eines Sprays herzustellen, mit dem man einen temporären Nicht-Entflammbaren Effekt erzielen kann, der nachher gewünschtenfalls wieder abgewischt bzw. abgewaschen werden kann.

Die Qualität eines behandelten Materials und/oder Stoffes verbleibt unverändert, und wird nicht nachteilig beeinflusst.

Ein weiterer Vorteil der Erfindung ist, dass es in vielseitigen Industriezweigen und Erzeugnissen verwendet werden kann, und gewünschtenfalls ein temporärer bzw. auch ein permanenter Effekt erzielt werden kann. Der Nicht-Entflammbare Effekt von behandelten Textilien verschwindet durch Waschen vollständig, aber bei Trockenreinigung bleibt der Effekt erhalten.

Weitere Vorteile und vorteilhafte Ausgestaltungen der Erfindung sind den nachfolgenden Beispielen und den Ansprüchen entnehmbar. Alle in der Beschreibung, den nachfolgenden Beispielen und den Ansprüchen dargestellten Merkmale können sowohl einzeln als auch in beliebiger Kombination miteinander erfindungswesentlich sein.

### Beispiele

Im Folgenden soll nun die Funktionsweise der Erfindung anhand von Beispielen näher beschrieben werden, wobei die Beispiele zur Erfindung hinführen, selbst aber noch nicht unter die Erfindung fallen. Der Umfang der Erfindung ist in den Patentansprüchen definiert und wird durch die obige ausführliche Beschreibung gestützt. Die Beispiele dienen der weiteren Erläuterung.

Um die Zusammenmischung der Zusammensetzungen in den nachfolgenden Beispielen zu erleichtern wird empfohlen, das Wasser auf ca. 60°C zu erwärmen.

### Beispiel 1: Flammschutzmittel

Zusammensetzung in trockener Form (Pulver) für wässriges Lösungsmittel, insbesondere für Wasser, auf 1000 g Gesamtlösung; mit Summe Borax und Borsäure auf 95 g:

| | |
|---|---|
| Borax | 30 bis 65-70 g |
| Borsäure | 30 bis 65-70 g |
| Natriumchlorid (NaCl) | bis zu weniger als 5 g (max. < 5 Gew.-%) |
| Harnstoff | 0 bis 5 g |

### Beispiel 2: Flammschutzmittel

Zusammensetzung in trockener Form (Pulver) für wässriges Lösungsmittel, insbesondere für Wasser, auf 1000 g Gesamtlösung; mit Summe Borax und Borsäure auf 100 g:

| | |
|---|---|
| Borax | 35 bis 55 g |
| Borsäure | 35 bis 55 g |
| Natriumchlorid (NaCl) | bis zu weniger als 5 g |

### Beispiel 3: Flammschutzmittel

Zusammensetzung in trockener Form (Pulver) für wässriges Lösungsmittel, insbesondere für Wasser, auf 1000 g Gesamtlösung; mit Summe Borax und Borsäure auf 100 g.

| | |
|---|---|
| Borax | 35 bis 55 g |
| Borsäure | 35 bis 55 g |
| Natriumchlorid (NaCl) | 5 g (4,76 Gew.-%) |

### Beispiel 4: Flammschutzmittel

Zusammensetzung in trockener Form (Pulver) für wässriges Lösungsmittel, insbesondere für Wasser, auf 1000 g Gesamtlösung; mit Summe Borax und Borsäure auf 100 g.

| | |
|---|---|
| Borax | 45 bis 55 g |
| Borsäure | 45 bis 55 g |
| Natriumchlorid (NaCl) | bis zu weniger als 5 g (4,76 Gew.-%) |

### Beispiel 5: Flammschutzmittel

Zusammensetzung in trockener Form (Pulver) für wässriges Lösungsmittel, insbesondere für Wasser, auf 1000 g Gesamtlösung; mit Summe Borax und Borsäure auf max. 95 g:

| | |
|---|---|
| Borax | 45 bis 55 g |
| Borsäure | 45 bis 55 g |
| Natriumchlorid (NaCl) | bis zu weniger als 5 g (max. < 5 Gew.-%) |

### Beispiel 6: Flammschutzmittel

Zusammensetzung in trockener Form (Pulver) für wässriges Lösungsmittel, insbesondere für Wasser, auf 1000 g Gesamtlösung; mit Summe Borax und Borsäure auf 100 g:

| | |
|---|---|
| Borax | 30 bis 70 g |
| Borsäure | 30 bis 70 g |
| Natriumchlorid (NaCl) | bis zu 3 g (max. < 2,91 Gew.-%) |

### Beispiel 7: Weitere Flammschutzmittel analog zu Beispiel 6

| **Bsp. Nr.** | **Borax** | **Borsäure** | **NaCl** | **NaCl** |
|---|---|---|---|---|
| | **(g)** | **(g)** | **(g)** | **(Gew.-%)** |
| 7a | 60 | 40 | 4 | 3,85 |
| 7b | 40 | 60 | 4 | 3,85 |
| 7c | 60 | 40 | 3 | 2,91 |
| 7d | 40 | 60 | 3 | 2,91 |
| 7e | 60 | 40 | 2 | 1,96 |
| 7f | 40 | 60 | 2 | 1,96 |
| 7g | 54 | 44 | 2 | 2,0 |
| 7h | 54,5 | 44 | 1,5 | 1,5 |
| 7i | 55 | 45 | 1 | 0,99 |
| 7j | 45 | 55 | 1 | 0,99 |
| 7k | 55 | 44 | 1 | 1,0 |
| | 44 | 55 | 1 | 1,0 |
| 7l | 55 | 44,5 | 0,5 | 0,5 |
| 7m | 54,5 | 45 | 0,5 | 0,5 |
| 7n | 55 | 44,9 | 0,1 | 0,1 |

### Beispiel 8: Flammschutzmittel-Anwendunq

Die Flammschutzmittel der Beispiele 1 bis 7 zeigen hervorragende Flamm- und Brandschutzwirkung, insbesondere bei Holz- bzw. Papier-artigen Materialien, im Test mit einem Gasbrenner (Flammhitze, ggf. regulierbar, zwischen 350 bis etwa 1000 °C). Eine Flammbildung wird durch das Mittel verhindert und sofern dennoch eine anfängliche leichte Flammbildung bei Einwirkung des Gasbrenners auftritt, erlischt die Flamme sehr schnell und kann sich nicht selbst unterhalten.

### Beispiel 9: Flammschutz-Anwendunqen Blähqraphit - Holzfaserdämmplatten-Versuche

### Beispiel 9a:

In einem ersten Versuch wurden Holzfasern in einem Betonmischer eingefüllt und vorerst mit dem Flammschutz (Borsäure/Borax/Salz) gesprüht und anschließend mit einem PMDI Binder (formaldehydfreier Binder mit sehr wenig Einsatzmenge, bisher im Stand der Technik Harnstoff) besprüht. Nach ausreichendem Durchmischen wurden die behandleten Holzfasern unter hohem Druck und Temperatur zu Holzfaserdämmplatten gepresst. Die hergestellten Cellulose-/Holzfaser-Platten brannten trotz 10 minütiger Beflammung nicht rasch ab, sondern nur sehr langsam durch inneres Nachglühen, was durch die gespeicherte innere Zündtemperatur und dem vorhandenen Sauerstoff verursacht wird. Dieses Phänomen ist das eigentliche Hauptproblem, weshalb eine derartige Holzfaserdämmplatte des Standes der Technik kein Brandzertifikat (B1) erreicht.

### Beispiel 9b:

In einem weiteren Versuch wurde das PMDI mit zwei verschiedenen Brandschutzmitteln abgemischt. Da das PMDI mit Wasser reagiert und in beiden verwendeten Brandschutzmitteln Wasser enthalten war, waren auch diese Versuche nicht erfolgreich. Aus den Versuchen ergab sich die Hypothese, dass Borsäure aus den Brandschutzmitteln die Holzfasern gut schützt und somit das PMDI nachglühte. Daher wurden zusätzliche Phosphonat-basierende Brandschutzmittel appliziert, was jedoch ebenfalls nicht erfolgreich war.

### Beispiel 9c:

Weitere Versuche mit verschiedenen Mischungsvarianten von Brandschutzmitteln wurden intensiviert und in ähnlicher Weise zu den vorstehenden fehlgeschlagenen Versuche Versuche durchgeführt: Holzfasern wurden im Betonmischer mit 20 Gew.-% Borsäure-Flammschutzmittel und 5 Gew.-% Phosphonat-basierendes Flammschutzmittel und 0,3 Gew.-% PMDI besprüht, vermischt und unter Druck und Temperatur zu Holzfaserplatten verpresst. Die Holzfasern waren jedoch zu nass, ließen sich daher kaum verkleben, und dennoch glühten diese im Brand-/Flammversuch nach, und zwar auch nach vollständiger Trocknung glühte es noch nach.

### Beispiel 9d:

Die vorstehenden fehlgeschlagenen Versuche wurden zu erfindungsgemäßen Versuchen modifiziert. Hierzu wurden zwei repräsentative Versuche durchgeführt:
Referenz-Versuch 1: 500 g Holzfasern wurden mit 12% Restfeuchte in einen Betonmischer eingefüllt, dann 120 g Blähgraphit (möglich ist auch mit weniger und mehr, insbesondere im Bereich 1 Gew.-% - 60 Gew.-% bezogen auf Gewichtsmenge der Holzfasern als 100 Gew.-%) zudosiert und 5 Min. durchmischt. Es wurden dann 0,3 Gew.-% PMDI (bezogen auf behandelte Holzfasern als 100-Gew.-%) aufgesprüht, Das Mischgut wurde in eine Pressform eingefüllt und mit 170 Tonnen bei 200 °C verpresst. Das erhaltene Holzfaserplatten-Erzeugnis wies die für die Praxis erforderliche Festigkeit auf, Nach 10 Min. Beflammung wurden kein Brennen und kein Nachglühen beobachtet, die Temperatur der Brandfläche sank schlagartig. Blähgraphit wirkte intumiszierend, blähte an der Brandstelle auf, verhinderte das Entzünden der Cellulose, ließ keine Temperatur ins Holzinnere, erlosch sofort nach Entfernen der Flamme, und glühte keineswegs nach. Somit wies das erfindungsgemäße mit Blähgraphit geschützte Holzfaserplatten-Erzeugnis Brandschutzeigenschaften für zumindest ein B1-Zertifikat auf.
Referenz-Versuch 2: Holzfasern in wurden Borsäure/Borax/Salz-Lösung eingelegt bzw. vollständig eingetränkt, in einer Menge wie im allgemeinen Teil der Anmeldung beschrieben. Diese behandelten Holzfasern ließ man wieder trocknen, sie wurden in einen Betonmischer eingefüllt und mit 0,3 Gew.-% PMDI (bezogen auf behandelte Holzfasern als 100-Gew.-%) besprüht, sodann in eine Pressform eingelegt und mit 170 Tonnen bei 200 °C verpresst. Die Festigkeit der erhalten Holzfaserplatte war ebenfalls sehr gut, sie brannte bei Beflammung nicht, die Brandfläche strahlte nach Beflammung noch etwas Temperatur aus, das Nachglühen war aber sehr gering, und nach spätestens 20 Min. wurde kein Nachglühen mehr beobachtet, die Temperatur nahm ab, die ggf. bei Beflammung beobachtete Glut erlosch vollständig.

### Beispiel 10:

Bei Dämmungen, Wandbelägen und Bodenbelägen, beispielsweise in Form von Schaum-, Press-, Filz-, Vlies- und/oder Komposit-(Vor-)Produkten, bestehend aus oder umfassend Holz- und/oder Cellulosefasern sowie Bindemittel und/oder Leime und/oder Polyolefin-basierte Stoffe der oben beschriebenen Art, hat sich der Einsatz von Blähgraphit als sehr vorteilhaft erwiesen.

Die Erfindung kann daher für die Ausgestaltungen betreffend Materialien und/oder (Vor-)Produkte, die aus insbesondere Bindemittel und/oder Leime enthaltenden Holzfasern und/oder Cellulosefasern und/oder aus Holzpulvern und/oder Cellulosepulvern und/oder Holzgranulaten und/oder Cellulosegranulaten bestehen oder diese umfassen, und/oder bestehend aus oder umfassend Polyolefin-basierte Stoffe der oben beschriebenen Art, ausgeführt werden, indem in diese Materialien und/oder (Vor-)Produkte zur Verminderung der Entflammbarkeit und/oder Brennbarkeit, insbesondere als Flammschutzmittel und/oder Brandschutzmittel, Blähgraphit direkt eingearbeitet wird. Beispielsweise wird eine ggf. Füllstoffe (z.B. Talkum, Kaolin) sowie ggf. zusätzlich eine Kombination und/oder ein Gemisch Bs/Bx/S enthaltende, Blähgraphit enthaltende Zusammensetzung auf ein behandeltes oder unbehandeltes Schaum-, Press-, Filz-, Vlies- und/oder Komposit-(Vor-)Produkt (oder daraus gebildeten Träger) als Pulver und/oder Granulat aufgestreut und/oder, falls als Lösung bzw. Emulsion bzw. Suspension vorliegend, auch aufgesprüht werden, die derart erhaltene Beschichtung aufgeschmolzen, ggf. auch unter flächigem Andruck oder flächigem Pressen, und/oder getrocknet werden, bspw. bei Temperaturen von z.B. etwa >200 °C, Zum Aufbringen können auch Extrusionsverfahren zum Einsatz gelangen.

Die Verwendung von Blähgraphit in den beschriebenen Materialien und/oder (Vor-)Produkten ermöglicht es, bei (vertikaler) Kantenbeflammung eine Verschmelzung bzw. ein Tropfen durch Verschmelzung des z.B. in den Holzfasern und/oder Cellulosefasern und/oder aus Holzpulvern und/oder Cellulosepulvern und/oder Holzgranulaten und/oder Cellulosegranulaten enthaltenen Bindemittels und/oder Leims, und speziell von in den Materialien und/oder (Vor-)Produkten enthaltener Polyolefin-basierter Stoffe wie insbesondere Polyethylen, Polypropylen und/oder Polystyrol, wirkungsvoll zu unterbinden und somit die Flammenbildung und die Ausbreitung eines Brandes zu verhindern, zumindest aber über einen ausreichenden Zeitraum hinweg soweit zu erschweren.

## Patentansprüche

1. Verwendung von Blähgraphit zur Verminderung der Entflammbarkeit und/oder Brennbarkeit, insbesondere Verwendung als Flammschutzmittel und/oder Brandschutzmittel, für Materialien und/oder Produkte und/oder Vorprodukte, die aus Holzfasern und/oder Cellulosefasern und/oder aus Holzpulvern und/oder Cellulosepulvern und/oder Holzgranulaten und/oder Cellulosegranulaten und/oder Polyolefin- oder Polystyrol-basierten Materialien bestehen oder diese umfassen, insbesondere für Bindemittel und/oder Leime und/oder Polyolefin- oder Polystyrol-basierte Stoffe enthaltende Materialien und/oder Produkte und/oder Vorprodukte, vorzugsweise für die Dämmung, einschließlich von Wand, Boden und/oder Decke, und/oder für Bodenbeläge und Wandbeläge, und wobei die Menge an Blähgraphit in den Blähgraphit-enthaltenden Materialien und/oder Produkten nicht mehr als 45 Gew.-% bezogen auf das gesamte Blähgraphit-enthaltende Material und/oder Produkt und/oder Vorprodukt als 100 Gew.-%, beträgt,
wobei
die Verwendung von Blähgraphit in Kombination mit einem weiteren Mittel zur Verminderung der Entflammbarkeit und/oder Brennbarkeit von Materialien und/oder Produkten und/oder Vorprodukten erfolgt, insbesondere als Flammschutzmittel und/oder Brandschutzmittel, umfassend, jeweils bezogen auf das gesamte Blähgraphit-enthaltende Material und/oder Produkt und/oder Vorprodukt als 100 Gew.-%,
(i) nicht mehr als 45 Gew.-% Blähgraphit; und
(ii) als das weitere Mittel bis zu 15 Gew.-% eine Kombination und/oder ein Gemisch Borsäure/Borax/Alkalichlorid, jeweils bezogen auf die Kombination und/oder das Gemisch als 100 Gew.-%. enthaltend oder bestehend aus:
a) 30 bis 70 Gew.-% Borsäure;
b) 30 bis 70 Gew.-% Borax;
c) ein Alkalichlorid, vorzugsweise Natriumchlorid, in einer Menge von weniger als 5 Gew.-%; und
d) gewünschtenfalls Harnstoff bis zu 5 Gew.-%.

2. Materialien und/oder Produkte und/oder Vorprodukte, die aus Holzfasern und/oder Cellulosefasern und/oder aus Holzpulvern und/oder Cellulosepulvern und/oder Holzgranulaten und/oder Cellulosegranulaten, und/oder Polyolefin- oder Polystyrol-basierten Materialien bestehen oder diese umfassen, insbesondere Bindemittel und/oder Leime und/oder Polyolefin- oder Polystyrol-basierte Stoffe enthaltende Materialien und/oder Produkte und/oder Vorprodukte, vorzugsweise für die Dämmung, einschließlich Wand, Boden und/oder Decke, und/oder für Bodenbeläge und Wandbeläge, wobei
A) in diese Materialien und/oder Produkte und/oder Vorprodukte zur Verminderung der Entflammbarkeit und/oder Brennbarkeit, insbesondere als Flammschutzmittel und/oder Brandschutzmittel, Blähgraphit in den Blähgraphit-enthaltenden Materialien und/oder Produkten und/oder Vorprodukten in nicht mehr als 45 Gew.-% bezogen auf das gesamte Blähgraphit-enthaltende Material und/oder Produkt und/oder und/oder Vorprodukt als 100 Gew.-%, eingearbeitet ist;
und wobei
B) Blähgraphit in Kombination mit einem weiteren Mittel zur Verminderung der Entflammbarkeit und/oder Brennbarkeit von Materialien und/oder Produkten und/oder Vorprodukten, insbesondere als Flammschutzmittel und/oder Brandschutzmittel, umfassend, jeweils bezogen auf das gesamte Blähgraphit-enthaltende Material und/oder Produkt und/oder Vorprodukt als 100 Gew.-%, wobei
(i) nicht mehr als 45 Gew.-% Blähgraphit; und
(ii) als das weitere Mittel bis zu 15 Gew.-% einer Kombination und/oder eines Gemisches Borsäure/Borax/Alkalichlorid, jeweils bezogen auf die Kombination und/oder das Gemisch als 100 Gew.-%. enthaltend oder bestehend aus:
a) 30 bis 70 Gew.-% Borsäure;
b) 30 bis 70 Gew.-% Borax;
c) ein Alkalichlorid, vorzugsweise Natriumchlorid, in einer Menge von weniger als 5 Gew.-%; und
d) gewünschtenfalls Harnstoff bis zu 5 Gew.-%;
eingearbeitet ist.

3. Verfahren zur Herstellung von Materialien und/oder Produkten und/oder Vorprodukten nach Anspruch 2, die aus Holzfasern und/oder Cellulosefasern und/oder aus Holzpulvern und/oder Cellulosepulvern und/oder Holzgranulaten und/oder Cellulosegranulaten und/oder Polyolefin- oder Polystyrol-basierten Materialien bestehen oder diese umfassen, vorzugsweise Schaum-, Press-, Filz-, Vlies und/oder Komposit-Produkte, wobei während der Herstellung dieser Materialien und/oder Produkten und/oder Vorprodukten, insbesondere als Bindemittel und/oder Leime und/oder Polyolefin- oder Polystyrol-basierte Stoffe enthaltende Materialien und/oder Produkte und/oder Vorprodukte, vorzugsweise für die Dämmung, einschließlich Wand, Boden und/oder Decke, und/oder für Bodenbeläge und Wandbeläge, zur Verminderung der Entflammbarkeit und/oder Brennbarkeit, insbesondere als Flammschutzmittel und/oder Brandschutzmittel, Blähgraphit in Kombination mit einem weiteren Mittel zur Verminderung der Entflammbarkeit und/oder Brennbarkeit von Materialien und/oder Produkten, wie in Anspruch 2 B) definiert, eingearbeitet wird.

4. Verfahren nach Anspruch 3 zur Herstellung von Materialien und/oder Produkten, wobei
a) in einem ersten Verfahrensschritt Holzfasern und/oder Cellulosefasern und/oder Holzpulver und/oder Cellulosepulver und/oder Holzgranulat und/oder Cellulosegranulat mit dem in Anspruch 2 B) definierten Mittel zur Verminderung der Entflammbarkeit und/oder Brennbarkeit von Materialien, insbesondere Flammschutzmittel und/oder Brandschutzmittel, enthaltend oder bestehend aus einer Kombination und/oder einem Gemisch Borsäure/Borax/Alkalichlorid behandelt und sodann ggf. getrocknet wird; und
b) in einem zweiten Verfahrensschritt die im Verfahrensschritt a) mit der Kombination und/oder dem Gemisch Borsäure/Borax/Alkalichlorid behandelten Holzfasern und/oder Cellulosefasern und/oder Holzpulver und/oder Cellulosepulver und/oder Holzgranulat und/oder Cellulosegranulat mit Blähgraphit, wie in Anspruch 2 A) definiert, gemischt und/oder beaufschlagt werden; und
c1) gewünschtenfalls als Bulkware konfektioniert werden; und/oder
c2) gewünschtenfalls zu Schaum-, Press-, Filz-, Vlies und/oder Komposit-Produkten weiterverarbeitet werden.

## Claims

1. Use of expandable graphite for reducing the flammability and/or combustibility, in particular use as flame retarding agents and/or fire retarding agents, for materials and/or products and/or pre-products, consisting of wood fibers and/or cellulose fibers and/or of wood powders and/or cellulose powders and/or or wood granulates and/or cellulose granulates and/or polyolefin- or polystyrene-based materials, or comprising these, in particular for materials and/or products and/or pre-products containing binders and/or glues and/or polyolefin- or polystyrene-based matters, preferably for the insulation, including wall, floor, ceiling, and/or for floor coverings and wall coverings, and wherein the amount of expandable graphite in the expandable graphite-containing materials and/or products is not more than 45 wt.-% based on the total expandable graphite-containing material and/or product and/or pre-product as 100 wt.-%,
wherein
the use of expandable graphite is carried out in combination with a further agent for reducing the flammability and/or combustibility of materials and/or products and/or pre-products, in particular as flame retarding agents and/or fire retarding agents, comprising, in each case based on the entire expandable graphite-containing material and/or product and/or pre-product as 100 wt.-%,
(i) not more than 45 wt.-% of expandable graphite; and
(ii) as the further agent up to 15 wt.-% of a combination and/or a mixture of boric acid/borax/alkali chloride, in each case based on the combination and/or the mixture as 100 wt.-% containing or consisting of:
a) 30 to 70 wt.-% boric acid;
b) 30 to 70 wt.-% borax;
c) an alkali chloride, preferably sodium chloride, in an amount of less than 5 wt.-%; and
d) if desired, urea up to 5 wt.-%.

2. Materials and/or products and/or pre-products consisting of wood fibers and/or cellulose fibers and/or of wood powders and/or cellulose powders and/or wood granulates and/or cellulose granulates, and/or polyolefin- or polystyrene-based materials, or comprising these, in particular materials and/or products and/or pre-products containing binders and/or glues and/or polyolefin- or polystyrene-based matters, preferably for the insulation, including wall, floor, ceiling, and/or for floor coverings and wall coverings, wherein
A) into these materials and/or products and/or pre-products, for reducing the flammability and/or combustability, in particular as flame retarding agents and/or fire retarding agents, expandable graphite is incorporated into the expandable graphite-containing materials and/or products and/or pre-products in not more than 45 wt.-% based on the total expandable graphite-containing material and/or product and/or pre-product as 100% by weight;
and wherein
B) expandable graphite is incorporated in combination with a further agent for reducing the flammability and/or combustibility of materials and/or products and/or pre-products, in particular as flame retarding agents and/or fire retarding agents, comprising, in each case based on the entire expandable graphite-containing material and/or product and/or pre-product as 100 wt.-%, wherein
(i) not more than 45 wt.-% of expandable graphite; and
(ii) as the further agent up to 15 wt.-% of a combination and/or a mixture of boric acid/borax/alkali chloride, in each case based on the combination and/or the mixture as 100 wt.-% containing or consisting of:
a) 30 to 70 wt.-% boric acid;
b) 30 to 70 wt.-% borax;
c) an alkali chloride, preferably sodium chloride, in an amount of less than 5 wt.-%; and
d) if desired, urea up to 5 wt.-%.

3. Process for the manufacture of materials and/or products and/or pre-products according to claim 2, consisting of wood fibers and/or cellulose fibers and/or of wood powders and/or cellulose powders and/or wood granulates and or cellulose granulates and/or polyolefin- or polystyrene-based materials, or comprising these, preferably foam-, pressed-, felt-, nonwoven- and/or composite-products, wherein during the manufacture of these materials and/or products and/or pre-products, in particular as materials and/or products and/or pre-products containing binders and/or glues and/or polyolefin- or polystyrene-based matters, preferably for the insulation, including wall, floor and/or ceiling, and/or for floor coverings and wall coverings, for reducing the flammability and/or combustibility, in particular as flame retardant and/or fire retardant, expandable graphite is incorporated in combination with a further agent for reducing the flammability and/or combustibility of materials and/or products, as defined in claim 2 B).

4. A method according to claim 3 for the manufacture of materials and/or products, wherein:
a) in a first process step, wood fibers and/or cellulose fibers and/or wood powders and/or cellulose powders and/or wood granulate and/or cellulose granulate are treated with the agent, such as defined in claim 2 B), for reducing the flammability and/or combustability of materials, in particular flame retardants and/or fire retardants, containing or consisting of a combination and/or a mixture of boric acid/borax/alkali chloride, and then are optionally dried; and
b) in a second process step, the wood fibers and/or cellulose fibers and/or wood powders and/or cellulose powders and/or wood granulate and/or cellulose granulate treated in the process step a) with the combination and/or the mixture of boric acid/borax/alkali chloride, such as defined in claim 2 A), are mixed with and/or expandable graphite is applied thereupon; and
c1) if desired, are made up as bulk goods; and/or
c2) if desired, are further processed into foam-, pressed-, felt-, fleece- and/or composite-products.

## Revendications

1. Utilisation de graphite expansible pour réduire l'inflammabilité et/ou combustibilité, en particulier utilisation comme agents ignifuges et/ou agents de protection contre le feu, pour des matériaux et/ou produits et/ou produits intermédiaires composé de, ou en contenant, de fibres de bois et/ou de fibres de cellulose et/ou de poudres de bois et/ou de poudres de cellulose et/ou des granulés de bois et/ou des granulés de cellulose et/ou des matériaux à base de polyoléfine ou de polystyrène, en particulier pour des matériaux et/ou produits et/ou produits intermédiaires contenant des liants et/ou des colles et/ou des matériaux à base de polyoléfine ou de polystyrène, de préférence pour l'isolation, y compris le mur, le sol, le plafond, et/ou pour les revêtements de sol et les revêtements de mur, et dans lesquels la quantité de graphite expansible dans les matériaux et/ou produits contenant du graphite expansible ne dépassant pas 45 % en poids, sur la base de l'ensemble du matériau et/ou produit et/ou produit intermédiaires total contenant du graphite expansible à 100 % en poids,
dans lesquels
l'utilisation de graphite expansible est effectuée en combinaison avec un agent supplémentaire pour réduire l'inflammabilité et/ou combustibilité des matériaux et/ou produits et/ou produits intermédiaires, en particulier comme agents ignifuges et/ou agents de protection contre le feu, comprenant, dans chaque cas, sur la base de l'ensemble du matériau expansible total contenant du graphite et/ou produit et/ou intermédiaire à 100 % en poids,
(i) pas plus de 45 % en poids de graphite expansible; et
(ii) comme agent supplémentaire jusqu' à 15 % en poids d'une combinaison et/ou d'un mélange de acide borique/borax/chlorure alcalin, dans chaque cas sur la base de la combinaison et/ou du mélange en 100 % en poids contenant ou consistant en:
a) de 30 à 70 % en poids d'acide borique;
b) de 30 à 70 % en poids borax;
c) un chlorure de métal alcalin, de préférence du chlorure de sodium, en quantité inférieure à 5 % en poids; et
d) si désiré, l'urée jusqu' à 5 % en poids.

2. Matériaux et/ou produits et/ou produits intermédiaires composé de, ou en contenant, de fibres de bois et/ou de fibres de cellulose et/ou de poudres de bois et/ou de poudres de cellulose et/ou des granulés de bois et/ou des granulés de cellulose et/ou des matériaux à base de polyoléfine ou de polystyrène, en particulier pour des matériaux et/ou produits et/ou produits intermédiaires contenant des liants et/ou des colles et/ou des matériaux à base de polyoléfine ou de polystyrène, de préférence pour l'isolation, y compris le mur, le sol, le plafond, et/ou pour les revêtements de sol et les revêtements de mur, dans lesquels
A) dans ces matériaux et/ou produits et/ou produits intermédiaires pour réduire l'inflammabilité et/ou combustibilité, en particulier comme agents ignifuges et/ou agents de protection contre le feu, du graphite expansible est incorporé dans les matériaux et/ou produits et/ou produits intermédiaires contenant du graphite expansibles ne dépassant pas 45 % en poids sur la base de l'ensemble de la matière et/ou du produit et/ou produits intermédiaires contenant du graphite expansible total à 100 % en poids;
et dans lesquels
B) du graphite expansible est incorporé en combinaison avec un agent supplémentaire pour réduire l'inflammabilité et/ou combustibilité des matériaux et/ou produits et/ou produits intermédiaires, en particulier comme agents ignifuges et/ou agents de protection contre le feu, comprenant, dans chaque cas sur la base de l'ensemble du matériau et/ou produit et/ou produit intermédiaire contenant du graphite expansible total à 100% en poids, dans lesquels
(i) pas plus de 45 % en poids de graphite expansible; et
(ii) comme agent supplémentaire jusqu' à 15 % en poids d'une combinaison et/ou d'un mélange de acide borique/borax/chlorure alcalin, dans chaque cas sur la base de la combinaison et/ou du mélange en 100 % en poids contenant ou consistant en:
a) de 30 à 70 % en poids d'acide borique;
b) de 30 à 70 % en poids borax;
c) un chlorure de métal alcalin, de préférence du chlorure de sodium, en quantité inférieure à 5 % en poids; et
d) si désiré, l'urée jusqu' à 5 % en poids.

3. Procédé de fabrication de matériaux et/ou produits et/ou produits intermédiaires selon la revendication 2, composé de, ou en contenant, de fibres de bois et/ou de fibres de cellulose et/ou de poudres de bois et/ou de poudres de cellulose et/ou de granulés de bois et/ou de granulés de cellulose et/ou des matériaux à base de polyoléfine ou de polystyrène, de préférence des produits en mousse, en pressés, en feutres, en non-tissés et/ou en composites, dans lesquels lors de la fabrication de ces matériaux et/ou produits et/ou produits préliminaires, notamment comme matériaux et/ou produits et/ou produits préliminaires contenant des liants et/ou des colles et/ou des substances à base de polyoléfine ou de polystyrène, de préférence pour l'isolation, y compris les murs, les sols et/ou les plafonds, et/ou pour les revêtements de sol et les revêtements de mur, pour réduire la inflammabilité et/ou combustibilité, en particulier comme agents ignifuges et/ou agents de protection contre le feu, graphite expansible est incorporée en combinaison avec un agent supplémentaire pour réduire l'inflammabilité et/ou combustibilité des matériaux et/ou des produits, tels que défini dans la revendication 2 B).

4. Procédé selon la revendication 3 pour la fabrication de matériaux et/ou de produits, dans lesquels:
a) dans une première étape du procédé fibres de bois et/ou fibres de cellulose et/ou poudres de bois et/ou poudres de cellulose et/ou granulés de bois et/ou granulés de cellulose sont traités avec l'agent pour réduire l'inflammabilité et/ou combustibilité des matériaux, en particulier agents ignifuges et/ou agents de protection contre le feu, contenant ou consistant en une combinaison et/ou un mélange d'acide borique/borax/chlorure alcalin, tels que défini dans la revendication 2 B), et puis éventuellement sont séchés; et
b) dans une deuxième étape du procédé, les fibres de bois et/ou fibres de cellulose et/ou poudres de bois et/ou poudres de cellulose et/ou granulé de bois et/ou granulé de cellulose traitées avec la combinaison et/ou le mélange d'acide borique/borax/chlorure alcalin, tels que défini dans la revendication 2 A), sont mélangés et/ou appliqués avec du graphite expansible; et
c1) si désiré, sont constitué en vrac; et/ou
c2) si désiré, sont transformé en produits en mousse, en pressé, en feutre, en non-tissés et/ou en composites.
